(19) Europäisches Patentamt

European Patent Office

Office européen des brevets

(11) **EP 1 717 004 A1**

(12) **EUROPÄISCHE PATENTANMELDUNG**

(43) Veröffentlichungstag:
**02.11.2006 Patentblatt 2006/44**

(51) Int Cl.:
***B29C 35/02*** (2006.01)     ***B29C 45/73*** (2006.01)
***B29C 45/78*** (2006.01)

(21) Anmeldenummer: **06008885.3**

(22) Anmeldetag: **28.04.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **29.04.2005 DE 102005019890**

(71) Anmelder: **Hofmann, Dietmar**
**01458 Ottendorf-Okrilla (DE)**

(72) Erfinder: **Hofmann, Dietmar**
**01458 Ottendorf-Okrilla (DE)**

(74) Vertreter: **Carlsohn, Alexander**
**Patentanwälte**
**Riechelmann & Carlsohn**
**Wiener Strasse 91**
**01219 Dresden (DE)**

(54) **Vorrichtung und Verfahren zur Temperierung von Formwerkzeugen**

(57)     Die Erfindung betrifft eine Vorrichtung zur Temperierung des Formwerkzeuges einer Kunststoffverarbeitungsmaschine, insbesondere einer Spritzgießmaschine. Dabei ist vorgesehen, daß

(a) in dem Formwerkzeug Temperiermedienkanäle für zumindest ein Temperiermedium vorgesehen sind, wobei jeder Temperiermedienkanal einer Zone des Formwerkzeuges zugeordnet ist, so daß die Temperatur einer Zone unabhängig von der Temperatur einer anderen Zone geregelt werden kann;

(b) jeder Temperiermedienkanal eine Temperiermedien-Zuleitung und eine Temperiermedien-Ableitung aufweist;

(c) jeder Zone des Formwerkzeuges ein Temperaturfühler zur Bestimmung der Ist-Temperatur der Zone (T_ist) zugeordnet ist;

(d) zumindest ein Temperaturfühler zur Bestimmung der Temperatur des Temperiermediums vor dem Eintritt in das Formwerkzeug (Temperiermedien-Vorlauftemperatur T_vor) vorgesehen ist; und

(e) jeder Zone ein Mittel zur Bestimmung des Durchflusses (V) an Temperiermedium, das durch den Temperiermedienkanal fließt, zugeordnet ist.

Fig. 1

**Beschreibung**

Die Erfindung betrifft eine Vorrichtung zur Temperierung von Formwerkzeugen einer Kunststoffverarbeitungsmaschine, insbesondere einer Spritzgießmaschine. Die Erfindung betrifft ferner ein Verfahren zur Temperierung solcher Formwerkzeuge unter Verwendung dieser Vorrichtung.

Temperierte Formwerkzeuge werden insbesondere beim Spritzgießen von Kunststofformkörpern eingesetzt. Dabei wird typischerweise der Kunststoff in den Zylinder einer Spritzeinheit eingefüllt (Dosieren). In dem Zylinder ist eine Schnecke angeordnet, die durch radiale Drehung und axiale Rückwärtsbewegung den Kunststoff in dem Zylinder verteilt. Gleichzeitig wird der Kunststoff in dem Zylinder mittels Heizbänder erwärmt, so daß eine Plastifizierung des Kunststoffes erfolgt. Anschließend wird der plastifizierte Kunststoff in den Hohlraum (Kavität) des Formwerkzeuges durch eine axiale Vorwärtsbewegung der Schnecke eingespritzt (Einspritzen). Der Hohlraum stellt die Negativform für das zu formende Produkt, das Formteil, dar. Da der Kunststoff in dem Hohlraum des Formwerkzeuges schwindet, ist der Aufbau von Druck erforderlich (Nachdrücken). Das Formteil kühlt sich in dem Formwerkzeug ab (Abkühlen). Nach dem Abkühlen wird das Formteil aus dem Formwerkzeug entfernt, wozu das Formwerkzeug geöffnet wird (Entformen). Während des Abkühlens wird der Zylinder der Spritzeinheit erneut befüllt, so daß ein neuer Zyklus, bestehend aus Dosieren, Einspritzen, Nachdrücken, Abkühlen und Entformen, ausgeführt werden kann.

Das Abkühlen des Formteils in dem Formwerkzeug ist in der Regel ein zeitintensiver Teil eines Zyklus. Die Abkühlzeit muß so gewählt werden, daß das Formteil eine ausreichende Festigkeit, Formbeständigkeit und Maßhaltigkeit erreicht, bevor es aus dem Formwerkzeug entfernt wird. Aus diesem Grund ist eine Temperierung des Formwerkzeuges erforderlich.

Das Abkühlen des Werkzeuges ist im allgemeinen beim Spritzgießen von Thermoplasten notwendig. Beim Spritzgießen von Duroplasten und Elastomeren ist eine Erwärmung des Werkzeuges erforderlich, um eine Härtung oder Vulkanisation des eingespritzten Materials zu bewirken. Die Erwärmung des Werkzeuges kann mit einer elektrischen Heizung oder einem aufgeheizten Temperiermedium erfolgen.

Bekannte Formwerkzeuge weisen Kühl- oder Temperiereinrichtungen auf, mit denen ein Kühlmedium durch das Formwerkzeug geführt werden kann. Dazu sind in dem Formwerkzeug Leitungen für das Kühlmedium ausgebildet. EP 0 218 919 beschreibt ein Verfahren zur Temperierung eines solchen Formwerkzeuges. Dabei sind Temperaturfühler im Formwerkzeug sowie im Vorlauf und im Rücklauf des Kühlmediums vorgesehen. Der Durchfluß des Kühlmediums ist mit Ventilen steuerbar. Zur Einstellung der Durchflußmenge des Kühlmittels wird zunächst das Formwerkzeug auf eine vorgegebene Temperatur (Solltemperatur) erwärmt, dann werden die Ventile geöffnet und ein voller Zyklus ausgeführt und anschließend wird ein weiterer Zyklus mit geschlossenen Ventilen durchgeführt. Aus den dabei erhaltenen Temperaturdifferenzen zwischen der Solltemperatur und den tatsächlich während dieser Zyklen gemessenen Temperaturen wird die Öffnungszeit der Ventile berechnet, damit die Solltemperatur während eines Zyklus eingehalten werden kann.

Die bekannten Verfahren zur Temperierung von Formwerkzeugen werden in stetige Temperierverfahren und Impulskühlverfahren unterschieden.

Stetige Temperierverfahren sind durch einen ununterbrochenen Temperiermedien-Durchfluß durch das Formwerkzeug gekennzeichnet.

Stetige Temperierverfahren können in zwei Varianten unterschieden werden. In der ersten Variante wird ein kaltes Temperiermedium (beispielsweise ein Kühlmittelstrom) verwendet, um die Temperatur des Formwerkzeuges durch (manuelle) Eindrosselung des Temperiermediendurchflusses zu beeinflussen. Dies erfordert jedoch eine kontinuierliche Überwachung, da sowohl Veränderungen der die Formwerkzeugtemperatur beeinflussenden Parameter des Spritzgießprozesses als auch Schwankungen im Temperiermedium (z. B. Durchfluß und/oder Temperiermedientemperatur) zum Erhalt einer erforderlichen Produktqualität manuell ausgeregelt werden müssen.

In einer zweiten Variante der stetigen Temperierverfahren wird ein aufgeheiztes Temperiermedium eingesetzt, um die Temperatur des Formwerkzeuges durch Einbringung eines Temperiermediums einer vorgegebenen Temperatur zu beeinflussen. Die Temperierung mit aufgeheiztem Temperiermedium ist temperaturstabiler zumindest in bezug auf den Erhalt einer minimalen Formwerkzeugtemperatur als die Temperierung mit einem kalten Temperiermedium. Sie ist jedoch energieintensiver und verlängert die notwendige Kühlzeit des Formteiles. Schwankungen in den Parametern des Spritzgießprozesses, die die Formwerkzeugtemperatur beeinflussen, werden unzureichend ausgeregelt.

Alternativ zu den stetigen Temperierverfahren werden sogenannte Impulskühlverfahren eingesetzt. Bisher bekannte Impulskühlverfahren nutzen die Eigenwärme der Kunststoffschmelze zum Erreichen und Erhalten einer vorgegebenen Formwerkzeugtemperatur. Der Wärmeüberschuß je Zone des Formwerkzeuges wird durch dosierte Impulse eines relativ kalten Temperiermediums abgeführt. Die Verfahren basieren entweder auf der Temperaturmessung der Formwerkzeugtemperatur oder der Temperiermedienrücklauftemperatur in jeder Formwerkzeugzone oder an einem vorgegebenen Meßort im Formwerkzeug in Verbindung mit einer theoretischen Temperaturverteilung im Formwerkzeug. Impulskühlverfahren unterscheiden sich durch die Art und Weise der Berechnung des Kühlbedarfs und der daraus resultierenden Impulsdauer.

In US 4,420,446 wird eine Variante eines Impulskühlverfahrens beschrieben, bei der die Temperatur jeder Formwerkzeugzone durch einen Vergleich der Ist-Temperatur mit der Soll-Temperatur (Soll-Ist-Vergleich) geregelt wird. Dabei erfolgt eine Kühlung für die Dauer der Solltemperaturüberschreitung. Die Temperaturfühler sind im Formwerkzeug sehr nahe an der Kavität plaziert. Aufgrund der Kompliziertheit der thermodynamischen Vorgänge im Formwerkzeug, insbesondere aufgrund der Trägheit der Wärmeübertragung von der Kunststoffschmelze zum Formwerkzeug und zum Temperiermedium, führt eine ausschließlich auf einem Soll-Ist-Vergleich basierende Regelung nicht zu der erwünschten Konstanz der mittleren Formwerkzeugtemperatur.

In DE 43 073 47.6 wird ein Impulskühlverfahren beschrieben, das ausgehend von einer berechneten Temperaturverteilung für das gesamte Formwerkzeug und einer an nur einem definierten Punkt im Formwerkzeug gemessenen Temperatur unterschiedliche Zonen im Formwerkzeug nach unterschiedlichen Solltemperaturen regelt. Der Temperaturfühler ist im Formwerkzeug plaziert. Eine hinreichend genaue Vorausberechnung der Temperaturverteilung im Spritzgieß-Formwerkzeug setzt jedoch einen hohen Aufwand voraus. Die Temperaturmessung nur an einem Meßort im Formwerkzeug birgt überdies Risiken. Beispielsweise kann nicht ausgeschlossen werden, daß eine Beeinflussung der Formwerkzeugtemperatur in einzelnen Kreisen (z.B. Verringerung des Durchflusses) nicht ausgeregelt werden kann oder daß eine Beeinflussung der Formwerkzeugtemperatur am Meßort zu einer unnötigen Ausregelung in anderen Formwerkzeugzonen führt.

Ferner sind Impulskühlverfahren bekannt, die Mischverfahren von Steuerung und Regelung darstellen. Dazu wird über mehrere aufeinander folgende Zyklen die Impulsdauer, die notwendig ist, um eine bestimmte Solltemperatur zu halten, statistisch bewertet und als Impuls ausgegeben. In der Folge wird im gleichen Zyklus zum Soll-Ist-Vergleich übergegangen, bei Solltemperaturüberschreitung gekühlt und die Kühldauer erneut in die statistische Bewertung aufgenommen. Die Temperaturfühler sind für die jeweilige Werkzeugzone in der geometrischen Mitte zwischen Kavität und Kühlkanalebene plaziert. Die Anordnung der Temperaturfühler in dem Werkzeug zwischen Kavität und Kühlkanalebene ist jedoch mit hohem Aufwand verbunden.

EP 0 704 293 offenbart ein Impulskühlverfahren, bei dem Temperaturfühler im Rücklauf des Temperiermediums vorgesehen sind. Eine im Zustand des thermischen Gleichgewichtes im Formwerkzeug über die Kühlimpulsdauer aufgenommene Temperaturkurve des rückfließenden Temperiermediums fungiert als Referenzkurve. In der Folge werden Abweichungen des aktuellen Temperaturverlaufes im rückfließenden Temperiermedium von der Referenzkurve in Korrekturen der aktuellen Impulsdauer umgerechnet.

Impulskühlverfahren sind jedoch reine Kühlverfahren. Die Anwendungsgrenzen von Impulskühlverfahren liegen bei den Formwerkzeugen, bei denen die Eigenwärme der Kunststoffschmelze nicht ausreicht, die gewünschte Formwerkzeugtemperatur im gesamten Formwerkzeug oder in Teilbereichen zu erreichen oder in einer hinreichend kurzen Zeit zu erreichen.

Aufgabe der Erfindung ist es, die Nachteile nach dem Stand der Technik zu beseitigen. Es soll insbesondere eine Vorrichtung zur Temperierung von Formwerkzeugen einer Kunststoffverarbeitungsmaschine, insbesondere einer Spritzgießmaschine, angegeben werden, die es ermöglicht, die für eine oder verschiedene Zonen eines Formwerkzeuges vorgegebenen Temperaturen prozeßsicher und in kurzer Zeit einzustellen und energiesparend aufrechtzuerhalten. Ferner soll ein Verfahren zur Temperierung von Formwerkzeugen einer Kunststoffverarbeitungsmaschine angegeben werden.

Diese Aufgabe wird durch die Merkmale der Ansprüche 1 und 9 gelöst. Zweckmäßige Ausgestaltungen der Erfindungen ergeben sich aus den Merkmalen der Ansprüche 2 bis 8 und 10 bis 14.

Nach Maßgabe der Erfindung ist eine Vorrichtung zur Temperierung des Formwerkzeuges einer Kunststoffverarbeitungsmaschine, insbesondere einer Spritzgießmaschine vorgesehen, wobei

(a) in dem Formwerkzeug Temperiermedienkanäle für zumindest ein Temperiermedium vorgesehen sind, wobei jeder Temperiermedienkanal einer Zone des Formwerkzeuges zugeordnet ist, so daß die Temperatur einer Zone unabhängig von der Temperatur einer anderen Zone geregelt werden kann;

(b) jeder Temperiermedienkanal eine Temperiermedien-Zuleitung und eine Temperiermedien-Ableitung aufweist;

(c) jeder Zone des Formwerkzeuges ein Temperaturfühler zur Bestimmung der Ist-Temperatur der Zone ($T\_ist$) zugeordnet ist;

(d) zumindest ein Temperaturfühler zur Bestimmung der Temperatur des Temperiermediums vor dem Eintritt in das Formwerkzeug (Temperiermedien-Vorlauftemperatur $T\_vor$) vorgesehen ist; und

(e) jeder Zone ein Mittel zur Bestimmung des Durchflusses ($V$) an Temperiermedium, das durch den Temperiermedienkanal fließt, zugeordnet ist.

In einer Ausführungsform der Erfindung ist jede Temperiermedien-Zuleitung mit einem Vorlauf für ein kaltes Temperiermedium und einem Vorlauf für ein heißes Temperiermedium verbunden. Ferner sollte jede Temperiermedien-Ableitung mit einem Rücklauf für das kalte Temperiermedium und einem Rücklauf für das heiße Temperiermedium verbunden sein.

Vorzugsweise weist überdies jeder Vorlauf eines Temperiermedienkanals ein Ventil und jeder Rücklauf eines Temperiermedienkanals ein weiteres Ventil auf, wobei die Ventile für einen vorgegebenen Zeitraum (Temperiermedienimpuls) so geschaltet sind, daß

- wenn die Temperatur einer Zone erhöht werden soll, das Ventil des Vorlaufes für das heiße Temperiermedium geöffnet ist und das Ventil des Rücklaufes für das heiße Temperiermedium geöffnet ist, während das Ventil des Vorlaufes für das kalte Temperiermedium geschlossen ist und das Ventil des Rücklaufes für das kalte Temperiermedium geschlossen ist, so daß heißes Temperiermedium über den Zulauf des Temperierkanals in den Temperierkanal der Zone eintritt, von dort durch den Temperiermedienkanal der Zone fließt und über den Ablauf des Temperierkanals in den Rücklauf für das heiße Temperiermedium geführt wird; und

- wenn die Temperatur einer Zone verringert werden soll, das Ventil des Vorlaufes für das kalte Temperiermedium geöffnet ist und das Ventil des Rücklaufes für das kalte Temperiermedium geöffnet ist, während das Ventil des Vorlaufes für das heiße Temperiermedium geschlossen ist und das Ventil des Rücklaufes für das heiße Temperiermedium geschlossen ist, so daß kaltes Temperiermedium über den Zulauf des Temperierkanals in den Temperierkanal der Zone eintritt, von dort durch den Temperiermedienkanal der Zone fließt und über den Ablauf des Temperierkanals in den Rücklauf für das kalte Temperiermedium geführt wird.

Diese Art der Schaltung der Ventile wird im folgenden als "paarweise Schaltung" bezeichnet. Unter paarweiser Schaltung ist hier also zu verstehen, daß, wenn überhaupt Ventile eines Temperiermedienkanals geöffnet sind, entweder die beiden Ventile für das heiße Temperiermedium oder die beiden Ventile für das kalte Temperiermedium geöffnet sind. Die Ventile sind zweckmäßigerweise Magnetventile.

Die vorgeschlagene Vorrichtung ist in der Regel als autarkes System ausgebildet. Sie kann aber auch Bestandteil einer Spritzgießmaschine sein. Eine solche Maschine umfaßt neben dem Formwerkzeug die bekannten Einrichtungen, d. h. Einspritzeinheit mit einem Motor, einen Zuführtrichter für den Kunststoff, ein Schneckengehäuse und eine Austragsdüse, die in dem (geschlossenen) Formwerkzeug mündet.

Das Formwerkzeug weist vorzugsweise zwei Zonen oder mehr auf. Unter einer Zone wird hier ein Bereich des Formwerkzeuges verstanden, dessen Temperatur durch einen bestimmten Temperiermedienkanal in dem Formwerkzeug beeinflußt wird. Es ist bekannt, daß in der Kavität eines Formwerkzeuges Temperaturgradienten auftreten, die u. a. aus dem Fließverhalten des eingespritzten Kunststoffes, den Temperaturgradienten, die sich bei seiner Erstarrung ausbilden sowie der geometrischen Form des herzustellenden Formteiles resultieren. Aus diesem Grund kann es erforderlich sein, das Formwerkzeug in Bereiche ("Zonen") zu unterteilen, die voneinander unterschiedliche Soll-Temperaturen aufweisen. Diese Soll-Temperaturen werden erfindungsgemäß erreicht, indem die Zonen unabhängig voneinander temperiert werden.

Nach Maßgabe der Erfindung ist ferner ein Verfahren zur Temperierung von Formwerkzeugen für Kunststoffverarbeitungsmaschinen, insbesondere Spritzgießmaschinen vorgesehen, bei dem während jedes Zyklus zur Fertigung eines Formteils mittels des Formwerkzeuges ein Temperiermedienimpuls für jede Zone ausgelöst wird, wobei das Verfahren

(a) das kontinuierliche Bestimmen der Ist-Temperatur (T_ist), der Temperiermedien-Vorlauftemperatur (T_vor) und des Temperiermedien-Durchflusses (V) während des Temperiermedienimpulses in einem i-ten Zyklus;

(b) das Berechnen der Wärmemenge (WMT (i)), die während des Temperiermedienimpulses von dem Temperiermedium der Zone des Formwerkzeuges zugeführt oder aus dieser abgeführt worden ist;

(c) das Bewerten der zugeführten oder abgeführten Wärmemenge (WMT (i)) mittels eines Faktors (K1);

(d) das Berechnen einer Wärmemenge (WMT$_T$ (i+1)), die in einem (i+1)-ten Zyklus von einem Temperiermedium der Zone des Formwerkzeuges zugeführt oder aus dieser abgeführt werden soll; und

(e) das Wiederholen der Schritte (a) bis (e) bis zur Ausführung des letzen Zyklus, wobei in Schritt (a) die Dauer des Temperiermedienimpulses so bemessen ist, daß der Zone eine Wärmemenge zugeführt oder aus dieser abgeführt wird, die der berechneten Wärmemenge (WMT$_T$ (i+1) entspricht, umfaßt.

Das Zuführen einer bestimmten Wärmemenge zu einer Zone mittels eines Temperiermediums oder das Abführen einer bestimmten Wärmemenge aus einer Zone wird im folgenden auch als Wärmemengentransfer (WMT) bezeichnet.

Die Temperiermedien-Vorlauftemperatur T_vor wird vorzugsweise zentral im Vorlauf des Temperiermedienkreislaufes bestimmt. Die Ist-Temperatur T_ist der Zone des Werkzeuges wird entweder in der Ableitung des Temperierkanals bestimmt (Temperiermedien-Rücklauftemperatur) oder im Werkzeug selbst.

Vorzugsweise wird die Wärmemenge (WMT (i)) aus den gemessenen Ist-Temperaturen (T_ist), der Temperiermedien-Vorlauftemperatur (T_vor) und den mittleren Temperiermedien-Durchflüssen (V) während des Temperiermedienimpulses in dem i-ten Zyklus berechnet.

Der Faktor (K1) kann aus der Soll-Temperatur der Zone (T_soll), der mittleren Ist-Temperatur (T_ist_quer) während des Temperiermedienimpulses in dem i-ten Zyklus und der vorgegeben zulässigen Abweichung (T_g) von der Solltemperatur berechnet werden. Wird ein Temperiermedium durch den Temperiermittelkanal geführt, das eine höhere Temperatur als die Solltemperatur der Zone hat (Heizimpuls), so sollte als zulässige Abweichung (T_g) die obere zulässige Abweichung (T_o) verwendet werden. Wird ein Temperiermedium durch den Temperiermittelkanal geführt, das eine niedrigere Temperatur als die Solltemperatur der Zone hat (Kühlimpuls), so sollte als zulässige Abweichung (T_g) die untere zulässige Abweichung (T_u) verwendet werden.

Anhand der für (i+1)-ten Zyklus berechnete Wärmemenge (WMT$_T$ (i+1)) kann bestimmt werden, ob die Ventile des Vorlaufes und des Rücklaufes für das kalte Temperiermedium oder ob die Ventile des Vorlaufes und des Rücklaufes für das heiße Temperiermedium geöffnet werden, sofern zwei Temperiermedien vorgesehen sind.

Zu Beginn eines jeden Zyklus sollte zweckmäßigerweise eines der beiden Temperiermedien für eine vorgegebene Mindestzeit (im folgenden als Mindesttemperierimpuls oder Mindestimpuls bezeichnet) durch den Temperiermedienkanal der jeweiligen Zone geführt werden. Ein Mindesttemperierimpuls ist jedoch nur dann erforderlich, wenn die Berechnung von WMT$_T$ eine Impulsdauer ergibt, die geringer als die vorgegebene Mindestzeit ist, oder wenn das Temperiermedium gewechselt wurde.

Das erfindungsgemäße Verfahren ist insbesondere dadurch gekennzeichnet, daß die Ventile jeder Zone unabhängig von den Ventilen anderer Zonen des Formwerkzeuges geöffnet und geschlossen werden können. Da jedoch jede Zone mit einem Mindesttemperierimpuls temperiert wird, wozu bei jeder Zone die Ventile eines Vor- und Rücklaufes paarweise geöffnet werden, ist es bevorzugt, daß alle Ventile, die in einem Zyklus zu öffnen sind, gleichzeitig, d. h. zum selben Zykluszeitpunkt geöffnet werden.

Das Öffnen und Schließen der Ventile kann mittels einer Recheneinheit, beispielsweise eines Personalcomputers, gesteuert werden. Die Öffnungsdauer eines Ventilpaares wird als Impuls oder als Temperiermedienimpuls bezeichnet.

Das erfindungsgemäße Verfahren und die zugehörige Vorrichtung ermöglichen es, die Temperatur jeder Zone unabhängig von einer anderen Zone desselben Formwerkzeuges durch impulsartige Wärmezufuhr oder Wärmeabfuhr zu beeinflussen. Eine Wärmezufuhr wird durch das paarweise Öffnen der Ventile für das heiße Temperiermedium erreicht; in diesem Fall wird die betreffende Zone des Formwerkzeuges geheizt, so daß ein stetiger Anstieg der mittleren Temperatur dieser Zone für aufeinander folgende Zyklen erzielt wird. Eine Wärmemengenabfuhr wird durch das paarweise Öffnen der Ventile für das kalte Temperiermedium erreicht; in diesem Fall wird die betreffende Zone des Formwerkzeuges gekühlt, so daß ein stetiger Abfall der mittleren Temperatur dieser Zone für aufeinander folgende Zyklen erzielt wird.

Unter einem kalten Temperiermedium wird ein Medium verstanden, dessen Temperatur um einen vorgegebenen Wert unter der Temperatur der Zone liegt, die im Verlauf eines Formgebungszyklus die niedrigste Soll-Temperatur aller Zonen desselben Formwerkzeuges aufweist. Ein geeignetes kaltes Temperiermedium ist Kaltwasser. Kaltwasser steht in den meisten kunststoffverarbeitenden Betrieben über einen zentralen Kaltwasserkreislauf zur Verfügung. Alternativ kann auch ein Kühlaggregat vorgesehen sein.

Unter einem heißen Temperiermedium wird ein Medium verstanden, dessen Temperatur um einen vorgegebenen Wert über der Temperatur der Zone liegt, die im Verlauf eines Formgebungszyklus die höchste Soll-Temperatur aller Zonen aufweist. Ein geeignetes heißes Temperiermedium ist Heißwasser. Heißwasser kann beispielsweise mittels eines Heizgerätes erzeugt werden.

Das Heizgerät kann je nach Kunststoffverarbeitungsmaschine unterschiedliche maximale Heizleistungen aufweisen.

Die Temperiermedien sollten unter Druck stehen, so daß ein Fluß durch die Temperiermedienkanäle realisiert werden kann.

Unter einem Formgebungszyklus oder Zyklus werden die Schritte verstanden, um ein einzelnes Formteil mittels des Formwerkzeuges zu bilden. Bei einer Spritzgießmaschine umfaßt ein Formgebungszyklus normalerweise das Dosieren des Kunststoffes, Einspritzen, Nachdrücken, Abkühlen und Entformen des fertigen Formteils. Nach dem Entformen kann ein weiteres Formteil durch Abarbeiten eines neuen Zyklus gebildet werden.

Zweckmäßigerweise umfaßt die erfindungsgemäße Vorrichtung Verteiler (Vorlaufverteiler) für das kalte und das heiße Temperiermedium. Der Verteiler für das kalte Temperiermedium sollte einerseits mit den Temperiermedien-Zuleitungen der Temperiermedienkanäle der Zonen des Formwerkzeuges verbunden sein und andererseits mit einer zentralen Zufuhrleitung für die Zuführung des kalten Temperiermediums. Der Verteiler für das heiße Temperiermedium sollte einerseits mit den Temperiermedien-Zuleitungen der Temperiermedienkanäle der Zonen des Formwerkzeuges verbunden sein und andererseits mit einer zentralen Zufuhrleitung für die Zuführung des heißen Temperiermediums. Die Verteiler versorgen die Temperiermedien-Zuleitungen mit dem jeweiligen Temperiermedium, wenn die Ventile, die den Durchfluß der Temperiermedien durch die Temperiermedienkanäle steuern, geöffnet sind. Diese Ventile sind vorzugsweise zwischen den Vorlaufverteilern und den Temperiermedien-Zuleitungen angeordnet.

Der Vorlaufverteiler sollte einen modularen Aufbau haben. In diesem Fall besteht der Verteiler aus Untereinheiten, sogenannten Verteilerblöcken. Jeder Verteilerblock ist mit der zentralen Zufuhrleitung für das kalte Temperiermedium und mit der zentralen Zufuhrleitung für das heiße Temperiermedium verbunden. Der Verteilerblock verbindet die beiden zentralen Zufuhrleitungen mit der Temperiermedien-Zuleitung eines Temperiermittelkanals einer Zone.

Zweckmäßigerweise umfaßt die erfindungsgemäße Vorrichtung ferner Sammler (Rücklaufsammler) für das kalte und das heiße Temperiermedium, nachdem diese das Werkzeug verlassen haben. Der Sammler für das kalte Temperiermedium sollte einerseits mit den Temperiermedien-Ableitungen der Temperiermedienkanäle der Zonen des Formwerkzeuges verbunden sein und andererseits mit einer zentralen Abfuhrleitung für die Abführung des kalten Temperiermediums. Der Sammler für das heiße Temperiermedium sollte einerseits mit den Temperiermedien-Ableitungen der Temperiermedienkanäle der Zonen des Formwerkzeuges verbunden sein und anderseits mit einer zentralen Abfuhrleitung für die Abführung des heißen Temperiermediums. Die Sammler sorgen für das gesonderte Zusammenführen der Temperiermedienströme des heißen Temperiermediums einerseits und des kalten Temperiermediums andererseits, wenn diese die Temperiermedienkanäle verlassen. Zwischen den Rücklaufsammlern und den Temperiermedien-Zuleitungen sollten Ventile angeordnet sein.

Die Rücklaufsammler sollten ebenfalls einen modularen Aufbau haben.

Wie erläutert umfaßt die erfindungsgemäße Vorrichtung Temperaturfühler zur Bestimmung der Ist-Temperatur einer Zone (T_ist). Die Temperaturfühler können in den Ableitungen der Temperiermedienkanäle angeordnet sein, wobei ein Temperaturfühler in jeder Ableitung vorzusehen ist. Die in diesem Fall bestimmte Temperatur wird im folgenden auch als Temperiermedien-Rücklauftemperatur bezeichnet.

Alternativ können die Temperaturfühler auch in dem Formwerkzeug angebracht sein, wobei auch in diesem Fall für jede Zone ein Temperaturfühler vorzusehen ist. Selbstverständlich kann der Temperaturfühler, der die Temperatur einer Zone ermitteln soll, unabhängig von den anderen Zonen, entweder im Rücklauf oder im Formwerkzeug angeordnet sein; wesentlich ist lediglich, daß die Temperatur jeder Zone mittels eines Temperaturfühlers bestimmt werden kann.

In einer bevorzugten Ausführungsform weist jeder Temperiermedienkanal Sensoren zur Bestimmung des Durchflusses des jeweiligen Temperiermediums auf.

Wie erwähnt kann eine Recheneinheit zur Ausführung der vorgesehenen Berechnungen und zur Steuerung der Ventile vorgesehen sein. Sie kann zweckmäßigerweise auch Bedien- und Steuerelemente für die gesamte Kunststoffverarbeitungsmaschine aufweisen. Alternativ können die Bedien- und Steuerelemente auch unabhängig von der Recheneinheit vorgesehen sein.

Die Vorrichtung und das Verfahren ermöglichen es, unterschiedliche Temperierbedarfe eines Formwerkzeuges zu erfüllen. Dies ist Voraussetzung für eine optimale Arbeitsweise im Hinblick auf Effektivität und Qualität für das Formwerkzeug und den Formteilherstellungsprozeß. Die Erfindung gibt ein multizonales Temperaturregelsystem für Formwerkzeuge an, das als kompakte Einheit in der Lage ist, die unterschiedlichen Temperierbedarfe eines Formwerkzeuges zu erfüllen. Die Zonen des Formwerkzeuges mit Kühlbedarf, insbesondere die die Zykluszeit bestimmende Zone mit dem höchsten Kühlbedarf, werden bedarfsgerecht gekühlt, während andere Zonen bedarfsgerecht beheizt werden. Bedarfsgerechte Temperierung reduziert die Zykluszeit des Spritzgießprozesses in Richtung der für dieses Formteil minimal möglichen Zykluszeit.

Die vom Anwender vorgegebenen Solltemperaturen werden zum Fertigungsbeginn schnell erreicht und unabhängig von Schwankungen der Parameter des Spritzgießprozesses eingehalten. Überdies ermöglicht die Erfindung die individuelle Temperaturregelung für mehrere Zonen durch berechnete Wärmemengenzufuhr oder Wärmemengenabfuhr mit geringem apparatetechnischen Aufwand unter Ausnutzung der Eigenwärme der Kunststoffschmelze. Jede einzelne Zone kann nach der für das Spritzgießwerkzeug optimalen Formtemperatur geregelt werden. Die Ergebnisse für den Fertigungsprozeß bestehen in konstanter Formteilqualität bei effektivster Fertigung, da sowohl wärmebedürftige Zonen beheizt und als auch Zonen mit hohem Kühlbedarf ausreichend gekühlt werden.

Die notwendigen und differenzierten Betriebstemperaturen des Formwerkzeuges werden schnell erreicht; die Temperatur beeinflussenden Prozeßschwankungen im Spritzgießprozeß, insbesondere Schwankungen der Temperiermedienversorgung, werden schnell ausgeregelt; durch die weitestgehende Nutzung der Eigenwärme der Kunststoffschmelze wird der Energieeinsatz auf ein Minimum reduziert. Die erfindungsgemäße Vorrichtung benötigt wenig Platz und kann leicht in eine Kunststoffverarbeitungsmaschine, insbesondere eine Spritzgießmaschine integriert werden.

Die Erfindung wird nachfolgend unter Bezugnahme auf die Zeichnungen, ausführlicher beschrieben. Es zeigen

Fig. 1    eine schematische Darstellung einer ersten Ausführungsform der erfindungsgemäßen Vorrichtung und eines Formwerkzeuges einer Spritzgießmaschine; und

Fig. 2    eine schematische Darstellung einer zweiten Ausführungsform der erfindungsgemäßen Vorrichtung und eines Formwerkzeuges einer Spritzgießmaschine.

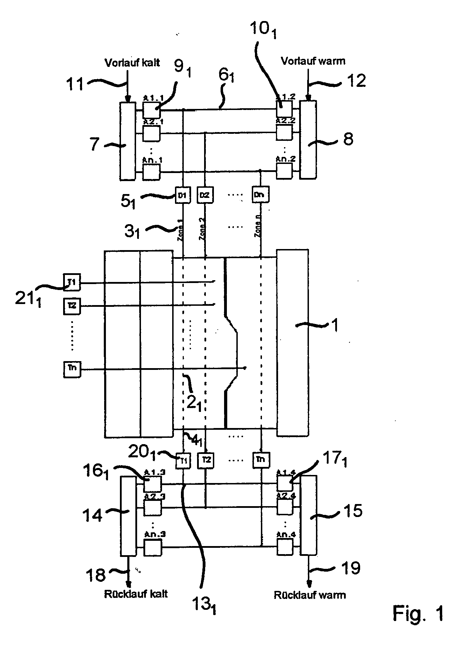

Nach Fig. 1 umfaßt die erfindungsgemäße Vorrichtung zur Temperierung des Formwerkzeuges 1 einer Kunststoffverarbeitungsmaschine n Temperiermedienkanäle 2 (gestrichelte Linien) für zwei Temperiermedien, wobei n für die Anzahl der Temperiermedienkanäle 2 steht. Jedem Temperiermedienkanal $2_k$ (k = 1 ... n) ist eine Zone des Formwerkzeuges 1 zugeordnet. Damit entspricht die Zahl der Zonen der Zahl der Temperiermittelkanäle 2.
Die folgenden Ausführungen beziehen sich auf den Temperiermedienkanal $2_1$, gelten aber auch für die übrigen Temperaturmedienkanäle. Der Temperiermedienkanal $2_1$ ist der Temperaturmedienkanal, der die Temperatur der ersten Zone des Werkzeuges 1 bestimmt. Dem Temperiermedienkanal $2_1$ sind eine Temperiermedienzuleitung $3_1$ und eine Temperiermedienableitung $4_1$ für das kalte Temperiermedium zugeordnet.
Die Temperiermedienzuleitung $3_1$ weist einen Durchflußsensor $5_1$ zur Bestimmung des Temperiermediendurchflusses auf. Die Temperiermedienzuleitung $3_1$ ist über ein T-Stück mit einer Einzelleitung $6_1$ verbunden. Das eine Ende der Einzelleitung $6_1$ mündet in dem Temperiermedienverteiler 7 für das kalte Temperiermedium, das andere Ende Einzelleitung $6_1$ in dem Temperiermedienverteiler 8 für das heiße Temperiermedium. Die Einzelleitung $6_1$ weist ein Ventil $9_1$ auf, das zwischen dem T-Stück und dem Temperiermedienverteiler $7_1$ angeordnet ist. Mit dem Ventil $9_1$ wird der Zufluß des kalten Temperiermediums geregelt. Die Einzelleitung $6_1$ weist ferner ein Ventil $10_1$ auf, das zwischen dem T-Stück und dem Temperiermedienverteiler $8_1$ angeordnet ist. Mit dem Ventil $10_1$ wird der Zufluß des heißen Temperiermediums geregelt.
Die Temperiermedienableitung $4_1$ weist einen Temperaturfühler $20_1$ zur Bestimmung der Temperiermedientemperatur (T_ist) nach dem Verlassen des Formwerkzeuges auf. Dies ist jedoch nicht zwingend erforderlich. Alternativ kann die Temperiermedientemperatur (T_ist) auch im Werkzeug selbst mittels dort vorgesehener Temperaturfühler $21_1$ bestimmt werden. Der Meßort von T_ist kann für jede Zone unabhängig von den anderen Zonen bestimmt werden, wobei T_ist für jede Zone bestimmt werden muß.
Die Temperiermedienableitung $4_1$ ist über ein T-Stück mit einer Einzelleitung $13_1$ verbunden. Das eine Ende der Einzelleitung $13_1$ mündet in dem Temperiermediensammler 14 für das kalte Temperiermedium, das andere Ende der Einzelleitung $13_1$ in dem Temperiermediensammler 15 für das heiße Temperiermedium. Die Einzelleitung $13_1$ weist ein Ventil $16_1$ auf, das zwischen dem T-Stück und dem Temperiermedienverteiler 14 angeordnet ist. Mit dem Ventil $16_1$ wird der Abfluß des kalten Temperiermediums geregelt. Die Einzelleitung $13_1$ weist ferner ein Ventil $17_1$ auf, das zwischen dem T-Stück und dem Temperiermedienverteiler 15 angeordnet ist. Mit dem Ventil $17_1$ wird der Abfluß des heißen Temperiermediums geregelt.
Sämtliche n Einzelleitungen $6_k$ sind mit den Temperiermedienverteilern 7 und 8 verbunden. Der Temperiermedienverteiler 7 ist mit dem Vorlauf 11 des Kühlkreislaufes verbunden. Der Temperiermedienverteiler 8 ist mit dem Vorlauf 12 des Heizkreislaufes verbunden.
Sämtliche n Einzelleitungen $13_k$ sind mit den Temperiersammlern 14 und 15 verbunden. Der Temperiermediensammler 14 ist mit dem Rücklauf 18 des Kühlkreislaufes verbunden. Der Temperiermediensammler 15 ist mit dem Rücklauf 12 des Heizkreislaufes verbunden.
Die Temperatur (T_vor) des kalten Temperiermediums wird mittels eines Temperatursensors im Vorlauf 11 bestimmt. Die Temperatur (T_vor) des heißen Temperiermediums wird mittels eines Temperatursensors im Vorlauf 12 bestimmt.
Soll kaltes Temperiermedium durch den Temperiermedienkanal $2_1$ geführt werden, so werden die Ventile $9_1$ und $16_1$ geöffnet, während die Ventile $10_1$ und $17_1$ geschlossen sind. Soll heißes Temperiermedium durch den Temperiermedienkanal $2_1$ geführt werden, so werden die Ventile $10_1$ und $17_1$ geöffnet, während die Ventile $9_1$ und $16_1$ geschlossen sind.

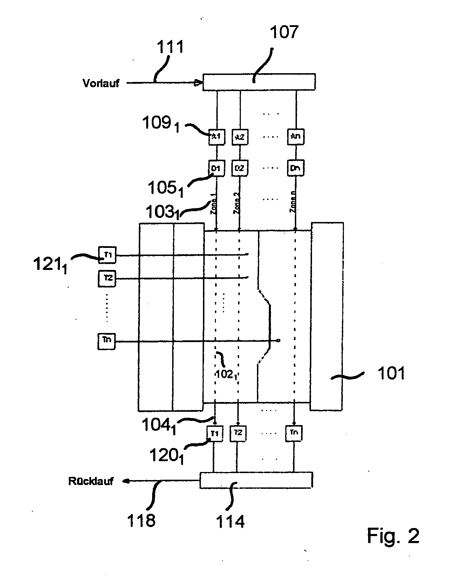

Die in Fig. 2 gezeigte zweite Ausführungsform zur Temperierung des Formwerkzeuges 101 einer Kunststoffverarbeitungsmaschine weist k Temperiermedienkanäle 102 (gestrichelte Linien) für nur ein Temperiermedium, vorzugsweise ein kaltes Temperiermedium, auf, wobei k für die Anzahl der Temperiermedienkanäle 102 steht. Jedem Temperiermedienkanal $102_k$ (k = 1 ... n) ist eine Zone des Formwerkzeuges 1 zugeordnet. Damit entspricht die Zahl der Zonen der Zahl der Temperiermittelkanäle 102.
Die folgenden Ausführungen beziehen sich auf den Temperiermedienkanal $102_1$, gelten aber auch für die übrigen Temperaturmedienkanäle. Der Temperiermedienkanal $102_1$ ist der Temperaturmedienkanal, der die Temperatur der ersten Zone des Werkzeuges 1 bestimmt. Dem Temperiermedienkanal $102_1$ sind eine Temperiermedienzuleitung $103_1$ und eine Temperiermedienableitung $104_1$ für das kalte Temperiermedium zugeordnet.
Die Temperiermedienzuleitung $103_1$ weist einen Durchflußsensor $105_1$ zur Bestimmung des Temperiermediendurchflusses auf. Die Temperiermedienzuleitung $103_1$ mündet in dem Temperiermedienverteiler 107 für das Tempe-

riermedium. Mit dem Ventil $109_1$ wird der Zufluß des Temperiermediums in die Temperiermedienzuleitung $103_1$ geregelt.

Die Temperiermedienableitung $104_1$ weist einen Temperaturfühler $120_1$ zur Bestimmung der Temperiermedientemperatur (T_ist) nach dem Verlassen des Formwerkzeuges auf. Dies ist jedoch nicht zwingend erforderlich. Alternativ kann die Temperiermedientemperatur (T_ist) auch im Werkzeug selbst mittels dort vorgesehner Temperaturfühler $121_1$ bestimmt werden. Der Meßort von T_ist kann für jede Zone unabhängig von den anderen Zonen bestimmt werden, wobei T_ist für jede Zone bestimmt werden muß.

Die Temperiermedienableitung $104_1$ mündet in dem Temperiermediensammler 114 für das Temperiermedium.

Sämtliche n Temperiermedienzuleitungen $103_k$ sind mit den Temperiermedienverteiler 107 verbunden. Der Temperiermedienverteiler 107 ist mit dem Vorlauf 111 des Kreislaufes für das Temperiermedium verbunden.

Sämtliche n Temperiermedienableitungen $104_k$ sind mit dem Temperiermediensammler 114 verbunden. Der Temperiermediensammler 114 ist mit dem Rücklauf 118 des Kreislaufes für das Temperiermedium verbunden.

Im folgenden wird das Verfahren anhand einer Vorrichtung für zwei Temperiermedien (siehe Fig. 1) erläutert.

Die Temperatur (T_vor) des kalten Temperiermediums wird mittels eines Temperatursensors im Vorlauf 11 bestimmt. Die Temperatur (T_vor) des heißen Temperiermediums wird mittels eines Temperatursensors im Vorlauf 12 bestimmt.

Soll kaltes Temperiermedium durch den Temperiermedienkanal $2_1$ geführt werden, so werden die Ventile $9_1$ und $16_1$ geöffnet, während die Ventile $10_1$ und $17_1$ geschlossen sind. Soll heißes Temperiermedium durch den Temperiermedienkanal $2_1$ geführt werden, so werden die Ventile $10_1$ und $17_1$ geöffnet, während die Ventile $9_1$ und $16_1$ geschlossen sind.

Mittels eines Bediengerätes für die Steuerelektronik der Vorrichtung gibt der Anwender (i) die Solltemperaturen T_soll, (ii) die Temperaturtoleranzen für jede Zone und (iii) die Mindestimpulsdauer nach einem Medienwechsel und für die Zonen, bei dem die Temperatur in der Temperiermedienableitung bestimmt wird, vor. Über die Temperaturtoleranzen wird bestimmt, ob eine Umschaltung von einem Temperiermedium auf das andere Temperaturmedium erfolgt. Die untere zulässige Abweichung von der Solltemperatur T_soll wird als T_u bezeichnet, wobei T_u < 0 ist, die obere zulässige Abweichung von der Solltemperatur T_soll wird als T_o bezeichnet, wobei T_o > 0 ist.

Sofern für eine Zone Temperaturfühler im Werkzeug und in der Temperiermedienableitung der Zone vorhanden sind, muß der Anwender ferner vorgeben, ob T_ist über den Temperaturfühler in der Zone oder über den Temperaturfühler in der Temperiermedienableitung bestimmt wird.

Das erfindungsgemäße Verfahren umfaßt die Bestimmung folgender Meßgrößen:

T_vor:   zentrale Vorlauftemperatur des kalten Temperiermediums, wenn das kalte Temperiermedium durch den Temperiermittelkanal geführt wird; oder

T_vor:   zentrale Vorlauftemperatur des heißen Temperiermediums, wenn das heiße Temperiermedium durch den Temperiermittelkanal geführt wird;

T_ist:   Zonenisttemperatur als Temperatur des Werkzeuges oder als Temperatur des rückfließenden Temperiermediums

V:   Volumenstrommessung im Vorlauf jeder Werkzeugzone

Das erfindungsgemäße Temperaturregelsystem startet vor dem Beginn der Spritzgießfertigung, um die Temperatur der Zonen auf die vorgegebenen Solltemperaturen T_soll einzustellen.

(a) Start des Temperaturregelsystems (vor dem Start der Spritzgießfertigung)

Mit dem Start des Temperaturregelsystems erfolgt in jeder Werkzeugzone ein erster Kühlimpuls mit kaltem Temperiermedium von festgelegter Dauer und die Messung von T_ist. Dazu werden sämtliche Ventile 9 und 16 geöffnet, die Ventile 10 und 17 sind geschlossen.

Ausgehend von der Temperaturdifferenz zwischen gemessener Isttemperatur und vorgegebener Solltemperatur wählt das Temperaturregelsystem dann das notwendige Temperiermedium je Werkzeugzone aus. Dabei wird das Heizmedium gewählt, wenn T_ist < T_soll + T_u (T_u < 0). Das Kühlmedium wird gewählt, wenn T_ist > T_soll + T_o (T_o > 0). Ist ein Wechsel des Temperiermediums in einer Zone j erforderlich, so werden die Ventile $9_i$ und $16_i$ geschlossen und die Ventile $10_i$ und $17_i$ geöffnet. Anschließend erfolgt eine stetige Temperierung je Werkzeugzone. Wird das heiße Temperiermedium durch die Werkzeugzone geführt, so wird die Temperiermedienzufuhr gestoppt, sobald T_ist dieser Werkzeugzone die untere Toleranzgrenze T_u erreicht. Wird das kalte Temperiermedium durch die Werkzeugzone geführt, so wird die Temperiermedienzufuhr gestoppt, sobald T_ist dieser Werkzeugzone die obere Toleranzgrenze T_o erreicht.

(b) Temperaturregelsystem nach Start der Spritzgießfertigung:

Nach dem Start der Spritzgießfertigung werden für jede Werkzeugzone und für jeden Maschinenzyklus i folgende Größen berechnet:

Gleichung 1: mittlere Isttemperatur

$$\text{T\_ist\_quer (i)} = \frac{1}{n} * \sum_{j=1}^{n} \text{T\_ist}(t_j)$$

wobei $t_j$ für die Zeitpunkte während eines Zyklus steht, an dem die Messungen der Meßgrößen durchgeführt werden.

Gleichung 2: realisierter Wärmemengentransfer

$$\text{WMT (i)} = \sum_{j=1}^{n} (\text{T\_vor}(t_j) - \text{T\_ist}(t_j)) * V(t_j)$$

Gleichung 3: mittlerer realisierter Wärmemengentransfer über z Zyklen

$$\text{WMT}_M \text{ (i)} = \frac{1}{z} \sum_{j=0}^{z} \text{WMT (i - j)}$$

wobei für z zweckmäßigerweise ein Wert von 3 bis 5 gewählt werden sollte.

Es erfolgt eine stetige Temperierung jeder Werkzeugzone bis zum Erreichen der ersten Toleranzgrenze in Temperaturänderungsrichtung:

Beim Heizen erreicht die mittlere Isttemperatur T_ist_quer der Werkzeugzone die untere Toleranzgrenze. Beim Kühlen erreicht die mittlere Isttemperatur T_ist_quer der Werkzeugzone die obere Toleranzgrenze.

(c) Regelphase

Nach Überschreiten der ersten Temperaturtoleranzgrenze beginnt die Regelphase:

Am Ende des Zyklus i, in dem die Temperaturtoleranzgrenze überschritten wurde, wird der realisierte Wärmemengentransfer WMT(i) dieses Zyklus berechnet und der mittlere realisierte Wärmemengentransfer $\text{WMT}_M$ (i) aktualisiert. Der mittlere realisierte Wärmemengentransfer $\text{WMT}_M$ (i) wird mit einem Faktor K1 bewertet.

Vor Start des Folgezyklus i+1 wird der zu realisierende $\text{WMT}_T$ (i+1) nach Gleichung (4) berechnet:

$$\text{Gleichung 4}$$
$$\text{WMT}_T \text{ (i+1)} = \text{K1} * \text{WMT}_M \text{ (i)}$$

mit

```
Gleichung 5


              T_soll - (T_ist_quer - T_g)
    K1 = --------------------------------

                    2 T_g
```

T_g =     T_o für Heizimpuls (Temperiermedienimpuls mit heißem Temperiermedium)
T_g =     T_u für Kühlimpuls (Temperiermedienimpuls mit kaltem Temperiermedium)

Mit Start des Folgezyklus wird ein Temperiermedienimpuls ausgelöst, der den nach Gleichung 4 berechneten Wärmemengentransfer realisiert. Zeitgleich mit dem Temperiermedienimpuls wird der aktuelle Wärmemengentransfer WMT nach Gleichung 2 berechnet. Ist der nach Gleichung 4 errechnete Wärmemengentransfer realisiert, wird der Temperiermedienimpuls beendet. Ebenfalls mit dem Temperierimpuls wird die mittlere Isttemperatur T_ist_quer nach Gleichung 1 berechnet. Am Ende des errechneten Temperiermedienimpulses wird ein Vergleich zwischen der errechneten mittleren Temperatur T_ist_quer und der Soll-temperatur T_soll durchgeführt. Ist T_ist_quer nach einem Heizimpuls kleiner als T_soll wird der Heizimpuls bis zum Erreichen von T_soll oder zum Zyklusende fortgeführt. Die dabei transferierte Wärmemenge wird berechnet. Ist T_ist_quer nach einem Kühlimpuls grösser als T_soll, wird der Kühlimpuls bis zum Erreichen von T_soll oder zum Zyklusende fortgeführt. Die dabei transferierte Wärmemenge wird berechnet.

(c1) Überschreiten der Solltemperatur T_soll beim Heizimpuls

Überschreitet die mittlere gemessene Isttemperatur T_ist_quer die vorgegebene Solltemperatur T_soll, folgt aus Gleichung 4 und Gleichung 5 eine Reduzierung des zu realisierenden Wärmemengentransfers WMT$_T$ gegenüber vorangegangenen Zyklen. Diese Reduzierung setzt sich beim weiterem Anstieg der mittleren gemessene Isttemperatur T_ist_quer in Richtung der oberen Temperaturtoleranz T_soll + T_o fort. Kommt es dennoch zum Erreichen bzw. Überschreiten der oberen Temperaturtoleranz ergibt sich bei der Errechnung des Faktors K1 ein negativer Wert. Das Temperaturregelsystem wechselt vom Heiz- zum Kühlmedium.

(c2) Unterschreiten der Solltemperatur T_soll beim Kühlimpuls

Unterschreitet die mittlere gemessene Isttemperatur T_ist_quer die vorgegebene Solltemperatur T_soll folgt aus (4) und (5) eine Reduzierung des zu realisierenden Wärmemengentransfers WMT$_T$ gegenüber vorangegangenen Zyklen. Diese Reduzierung setzt sich bei weiterem Sinken der mittleren gemessene Isttemperatur T_ist_quer in Richtung der unteren Temperaturtoleranz T_soll + T_u fort. Kommt es dennoch zum Erreichen bzw. Unterschreiten der unteren Temperaturtoleranz ergibt sich bei der Errechnung des Faktors K1 ein negativer Wert. Das Temperaturregelsystem wechselt vom Kühl- zum Heizmedium.

(c3) Regelverhalten nach Medienwechsel

Mit Zyklusstart des ersten Zyklus nach Medienwechsel wird der vorgegebene Mindestimpuls ausgelöst, nach 50 % der Zykluszeit ein weiterer Mindestimpuls. Der dabei realisierte Wärmemengentransfer wird nach Gleichung 2 berechnet. Nachdem die obere Summationsgrenze n in Gleichung 3 n=1 gesetzt wurde, wird die Regelung wie nach Überschreiten der ersten Temperaturtoleranzgrenze fortgesetzt.

Beispiele

Beispiel 1

Beispiel 1 beschreibt Vorrichtung und Verfahren der Erfindung anhand eines Großwerkzeuges mit mehreren Zonen, wobei die Temperaturregelung am Beispiel von zwei Zonen näher erläutert wird. Die Temperaturmessung erfolgt bei der ersten Zone (Werkzeugzone 1) im Werkzeug, bei der zweiten Zone (Werkzeugzone 10) im Medienrücklauf. Beide Zonen wechseln von anfänglicher Heizung zur Kühlung. Die Vorrichtung ist schematisch in Fig. 1 gezeigt.
Auf einer Spritzgießmaschine vom Typ Krauss-Maffei wird ein Automobilteil "Stoßfängerverkleidung" aus Polypropylen/EPDM mit folgenden Parametern hergestellt:

- Werkzeugauslegung: 1-fach
- Masse eines Schusses: 2,6 kg
- Schließkraft: 21000 kN
- Vorlauftemperatur kalt: 17°C
- Zykluszeit: 70 s

Das Spritzgießwerkzeug ist mit 28 Temperierkreisläufen ausgestattet. Das multizonale Temperaturregelsystem ist zur erfindungsgemäßen Regelung von 28 Werkzeugzonen ausgerüstet. Die 28 Werkzeugzonen sind wie folgt mit der Temperiermedienversorgung verbunden:

Vom zentralen Kühlkreislauf des kunststoffverarbeitenden Betriebes wird der Temperiermedienverteiler des kalten Temperiermediums gespeist. Für jede einzelne der 28 Werkzeugzonen wird vom kalten Temperiermedienverteiler eine Einzelleitung, die mit einem Magnetventil ausgestattet ist, zu einem Verbindungsteil (z.B. T-Stück) geführt. Vom Heizgerät (Heizleistung 24 kW), das Bestandteil der erfindungsgemäßen Vorrichtung ist, wird der Temperiermedienverteiler des heißen Temperiermediums gespeist. Für jede einzelne der 28 Werkzeugzonen wird vom heißen Temperiermedienverteiler eine Einzelleitung, die mit einem Magnetventil ausgestattet ist, zu dem genannten Verbindungsteil (z.B. T-Stück) geführt. Das Verbindungsteil (T-Stück) befindet sich zweckmäßigerweise in Werkzeugnähe. Die verbleibende Einzelleitung zum Temperiermedienkanal des Spritzgießwerkzeuges ist mit einem Durchflußsensor zur Messung des Temperiermediendurchflusses versehen. Jeweils an zentraler Stelle in der Zuleitung des kalten Temperiermediums und in der Zuleitung des heißen Temperiermediums befindet sich ein Temperaturfühler zur Messung der Temperiermedienvorlauftemperatur. Beide vorlaufseitigen Temperiermedienverteiler, einschließlich Magnetventilen und Durchflußsensoren sind gemeinsam als kompakte Baugruppe ausgeführt und an der maschinenseitigen Aufspannplatte des Spritzgießwerkzeuges installiert.

Die 28 Zonen des Spritzgießwerkzeuges sind mit Temperaturfühlern ausgerüstet. Zehn der Temperaturfühler sind im Werkzeug plaziert, jeweils in der geometrischen Mitte zwischen Temperierkanalebene und Kavität. Bei den verbleibenden 18 Werkzeugzonen befinden sich die Temperaturfühler in Spezialadaptern unmittelbar im werkzeugseitigen Ausgang in Verlängerung des Temperiermedienkanals. Nach dieser Verlängerung oder Einzelleitung wird jeder Temperiermedienkanal aufgeteilt in die Zweige Kalt- und Heißwasserrücklauf. Beide Zweige sind mit jeweils einem Magnetventil ausgestattet. Der Kaltwasserrücklauf führt über eine Sammelleitung in den zentralen Kühlkreislauf des kunststoffverarbeitenden Betriebes, der Heißwasserrücklauf in die Sammelleitung des Heizgerätes. Beide rücklaufseitigen Temperiermedienverteiler, einschließlich Magnetventilen und Temperaturfühlern sind gemeinsam als kompakte Baugruppe ausgeführt und an der maschinenseitigen Aufspannplatte des Spritzgießwerkzeuges installiert.

Das Bedien- und Steuerteil (Industrie-PC) des multizonalen Temperaturregelsystems ist unmittelbar neben dem Bedien- und Steuerteil der Spritzgießmaschine angebracht. Das Bedienteil des multizonalen Temperaturregelsystems ist mit der Steuerung der Spritzgießmaschine gekoppelt und empfängt das Signal "Beginn Spritzen" aus jedem Zyklus der Spritzgießmaschine. Dieses Signal gilt als Zyklusstartsignal für das multizonale Temperaturregelsystem, nach Ablauf einer Verzögerungszeit werden die Temperiermedienimpulse für die einzelnen Werkzeugzonen ausgelöst. Die Verzögerungszeit ist zweckmäßigerweise gleich der Einspritzzeit.

Beispielhaft soll die Temperaturregelung an Werkzeugzone 1 und Werkzeugzone 10 erläutert werden. Werkzeugzone 1 ist dabei mit einem Temperaturfühler im Werkzeug und Werkzeugzone 10 mit einem Temperaturfühler im Temperiermedienrücklauf ausgestattet.

Als Solltemperatur für Zone 1 wird eine Werkzeugtemperatur von 45 °C und für Zone 10 eine Medienrücklauftemperatur von 28 °C gewählt. Die Toleranzen für beide Temperaturen betragen +/- 3 K.

Das multizonale Temperaturregelsystem wird vor der Spritzgießmaschine gestartet. Mit dem ersten Vergleich zwischen vorgegebenen Solltemperaturen und gemessenen Isttemperaturen erkennt das System Heizungsbedarf, startet das Heizgerät und setzt als Vorlauftemperatur des Heizkreislaufes eine Solltemperatur ein, die 5 K über der maximalen Solltemperatur der Werkzeugzonen liegt. 45 Minuten nach dem Start des Temperaturregelsystems wird die Spritzgießmaschine gestartet.

Zone 1:

Die beim Start gemessene Temperatur $T\_ist$ beträgt 20°C. Wegen der Differenz zur Solltemperatur $T\_soll$ = 45 °C erfolgt die paarweise Schaltung der zu Zone 1 gehörigen Ventile (Vorlauf, Rücklauf) des Heißwasserkreislaufes. Der Temperiermedien-durchfluß erfolgt stetig, bis die gemessene Isttemperatur die untere Toleranzgrenze von 42°C erreicht hat (Start + 50 min). Beginnend mit dem ersten Zyklus der Spritzgießmaschine (Start + 45 min) berechnet das Temperaturregelsystem den Wärmemengentransfer für die Werkzeugzone 1.

Berechnete Größen:

T_ist_quer:      Durchschnitt der gemessenen Ist-Temperatur T_ist über den gesamten Temperiermedienimpuls;
WMT(i)            im Zyklus i realisierter Wärmemengentransfer;
$WMT_M(i)$:       durchschnittlicher Wärmemengentransfer vorangegangener Zyklen
K1:               Maß für den Abstand der Ist-Temperatur T_ist zur vorgegebenen Soll-Temperatur T_soll unter Einbeziehung der Temperaturtoleranzen
$WMT_T(i+1)$:     Vorgabe des Wärmemengentransfers im Folgezyklus

Über die Dauer des Temperiermedienimpulses werden die durchschnittliche Temperatur T_ist_quer nach Gleichung 1 und der zum Zykluszeitpunkt realisierte Wärmemengentransfer nach Gleichung 2 berechnet.

Gleichung 2

$$WMT\ (i)\ =\ \sum_{j=1}^{n}\ (T\_vor(t_j)\ -\ T\_ist(t_j))\ *\ V(t_j)$$

WMT > 0: Heizung, Wärmemengenzufuhr
WMT < 0: Kühlung, Wärmemengenabfuhr

Gemäß Gleichung 2 bedeutet ein Wärmemengentransfer größer 0, daß der Zone mittels des Temperiermedienimpulses Wärme zugeführt wird, so daß diese sich aufheizt. Ist der Wärmemengentransfer kleiner 0, so wird aus der Zone mittels des Temperiermedienimpulses Wärme abgeführt, so daß sich die Zone abkühlt.

Während der Regelphase wird nach Abschluß der Temperiermedienimpulse, wenn die Messung im Temperiermedienrücklauf erfolgt, oder beim Start des Folgezyklus (Zyklus i+1), wenn die Temperaturmessung im Formwerkzeug erfolgt, aus dem aktuell errechneten Wert T_ist_quer für die Ist-Temperatur der Zone ein Faktor K1 berechnet (Gleichung 5), mit dem der mittlere Wärmemengentransfer $WMT_M(i)$ zurückliegender Zyklen bewertet und als Vorgabe für den Folgezyklus (Zyklus i+1) als $WMT_T(i+1)$ bereitgestellt wird.

Gleichung 5

$$K1\ =\ \frac{T\_soll\ +\ T\_g\ -\ T\_ist\_quer}{2\ *\ T\_g}$$

T_g = T_o für Heizimpuls, T_g = T_u für Kühlimpuls.

Daraus ergibt sich aus dem abgeschlossenen Zyklus der notwendige Wärmemengentransfer für den folgenden Zyklus nach Gleichung 4:

Gleichung 4

$$WMT_T\ (i+1)\ =\ K1\ *\ \ WMT_M\ (i)$$

$WMT_T$ (i+1):      für den i+1-ten Zyklus berechneter und vorgegebener Wärmemengentransfer

Während des Temperiermedienimpulses zur Umsetzung des berechneten Wärmemengentransfer $WMT_T$ (i+1) wird im (i+1)-ten Zyklus fortlaufend der tatsächlich realisierte Wärmemengentransfer WMT (i+1) ermittelt (Gleichung 2).

Zu dem Zeitpunkt, an dem der realisierte Wärmemengentransfer den berechneten Wärmemengentransfer wertmäßig überschreitet, wird der Temperiermedienimpuls gestoppt. Die bis zu diesem Zeitpunkt ermittelte Temperatur T_ist_quer wird mit der vorgegebenen Solltemperatur T_soll verglichen. Ist die mittlere Isttemperatur T_ist_quer beim Heizen kleiner als die Solltemperatur T_soll wird der Heizimpuls bis zum Erreichen von T_soll oder bis zum Start des Folgezyklus fortgeführt. Ist die mittlere Isttemperatur T_ist_quer beim Kühlen größer als die Solltemperatur T_soll wird der Heizimpuls bis zum Erreichen von T_soll oder bis zum Start des Folgezyklus fortgeführt. Der mit Fortführung des Temperierimpulses realisierte Wärmemengentransfer wird in die nachfolgende Berechnung des mittleren Wärmemengentransfers $WMT_M$ (i) und damit in die Berechnung des künftigen Wärmemengentransfers $WMT_T$ (i+1) einbezogen. Zuvor erfolgt eine Anpassung des Faktors K1 nach Gleichung 5.

Die folgende Tabelle 1 enthält die gemessenen und errechneten Prozeßwerte für eine Fertigungsperiode von 30 Maschinenzyklen:

Tabelle 1

| (A) | (B) | (C) | (D) | (E) | (F) | (G) | (H) | (I) | (J) | (K) |
|---|---|---|---|---|---|---|---|---|---|---|
| 5 | 39,9 | 1,35 | 50 | 9,0 | 70,0 | 6363,0 | 0,0 | 0,0 | 6363,0 | 8590,1 |
| 6 | 40,7 | 1,22 | 49,7 | 9,2 | 70,0 | 5808,6 | 0,0 | 0,0 | 6085,8 | 7404,4 |
| 7 | 42 | 1,00 | 49,3 | 9,1 | 7770,0 | 4624,6 | 0,0 | 0,0 | 5598,7 | 5598,7 |
| 8 | 42,4 | 0,93 | 48,9 | 9,1 | 70,0 | 4136,0 | 0,0 | 0,0 | 4856,4 | 4532,6 |
| 9 | 43 | 0,83 | 48,6 | 9,3 | 70,0 | 3626,0 | 0,0 | 0,0 | 4128,8 | 3440,7 |
| 10 | 43,5 | 0,75 | 48,4 | 9,1 | 70,0 | 3124,7 | 0,0 | 0,0 | 3628,9 | 2721,7 |
| 11 | 43,9 | 0,68 | 48,5 | 9,0 | 65,5 | 2722,0 | 4,5 | 186,9 | 3219,9 | 2200,3 |
| 12 | 45 | 0,50 | 50,4 | 9,2 | 44,4 | 2202,0 | 0,0 | 0,0 | 2745,2 | 1372,6 |
| 13 | 46 | 0,33 | 48,6 | 9,3 | 56,8 | 1374,0 | 0,0 | 0,0 | 2161,6 | 720,5 |
| 14 | 45,9 | 0,35 | 50,6 | 9,1 | 16,8 | 721,0 | 0,0 | 0,0 | 1432,3 | 501,3 |
| 15 | 45,5 | 0,42 | 49,5 | 9,2 | 13,7 | 502,0 | 0,0 | 0,0 | 865,7 | 360,7 |
| 16 | 44,9 | 0,52 | 49,2 | 9,2 | 9,1 | 362,0 | 0,0 | 0,0 | 528,3 | 273,0 |
| 17 | 44 | 0,67 | 49,3 | 9,1 | 5,7 | 273,0 | 10,0 | 482,3 | 539,8 | 359,8 |
| 18 | 44,2 | 0,63 | 49,3 | 9,1 | 7,8 | 360,5 | 7,5 | 348,1 | 608,6 | 385,5 |
| 19 | 44,5 | 0,58 | 48,4 | 9,1 | 10,8 | 387,0 | 6,0 | 213,2 | 688,0 | 401,3 |
| 20 | 44,8 | 0,53 | 48,5 | 9,0 | 12,0 | 402,0 | 3,0 | 100,2 | 603,7 | 322,0 |
| 21 | 45 | 0,50 | 50,4 | 9,2 | 6,5 | 323,0 | 0,0 | 0,0 | 475,1 | 237,6 |
| 22 | 46 | 0,33 | 48,6 | 9,3 | 9,8 | 239,0 | 0,0 | 0,0 | 354,7 | 118,2 |
| 23 | 46,8 | 0,20 | 50,6 | 9,1 | 3,4 | 119,0 | 0,0 | 0,0 | 227,0 | 45,4 |
| 24 | 47,2 | 0,13 | 49,5 | 9,2 | 2,2 | 47,0 | 0,0 | 0,0 | 135,0 | 18,0 |
| 25 | 47,8 | 0,03 | 49,5 | 9,2 | 1,2 | 19,0 | 0,0 | 0,0 | 61,7 | 2,1 |
| 26 | 48,1 | -0,02 | 49,5 | 9,2 | 0,2 | 3,0 | 0,0 | 0,0 | 23,0 | -0,4 |
| 27 | 47,1 | 0,85 | 17,3 | 7,0 | 3,0 | -627,6 | 0,0 | 0,0 | -627,6 | -533,4 |
| 28 | 46,3 | 0,72 | 17,2 | 7,1 | 2,6 | -535,0 | 10,2 | -2116,3 | -1639,5 | -1174,9 |
| 29 | 45,8 | 0,63 | 17,2 | 7,0 | 5,8 | -1176,0 | 9,4 | -1889,9 | -2115,0 | -1339,5 |
| 30 | 45,6 | 0,60 | 17,2 | 7,1 | 6,7 | -1341,0 | 10,0 | -2007,9 | -3022,1 | -1813,2 |
| 31 | 45,2 | 0,53 | 17,2 | 7,1 | 9,1 | -1815,0 | 16,0 | -3176,3 | -3802,0 | -2027,8 |
| 32 | 44,9 | 0,48 | 17,2 | 7,2 | 10,2 | -2029,0 | 7,5 | -1485,4 | -3951,5 | -1909,9 |
| 33 | 45,1 | 0,52 | 17,2 | 7,1 | 9,6 | -1911,0 | 12,0 | -2383,8 | -4266,8 | -2204,5 |
| 34 | 45 | 0,50 | 17,2 | 7,1 | 11,2 | -2206,0 | 10,3 | -2033,0 | -4016,1 | -2008,0 |

Die Spaltenüberschriften haben folgende Bedeutung:

(A): Maschinenzyklus i
(B): T_ist_quer(i) nach Gleichung 1
(C): K1 nach Gleichung 5
(D): T_vor(i)
(E): V_punkt(i)
(F): Temperiermedienimpuls zur Realisierung des nach Gleichung 4 vorgegebenen Wärmemengentransfers $WMT_T$ (i+1)
(G): nach Vorgabe Gleichung 4 realisierter Wärmemengentransfer WMT (i), (Gleichung 2)
(H): Zusatzpuls des Temperiermediums zur Erreichung von T_soll
(I): durch den Zusatzpuls realisierter Wärmemengentransfer nach Gleichung 2
(J): $WMT_M$ (i), mittlerer Wärmemengentransfer der zurückliegenden 3 Zyklen
(K): $WMT_T$ (i+1), der für den (i+1)-ten Zyklus berechnete (Soll)Wärmemengentransfer

Für die Regelung ist der Faktor K1 als Maß für die Annäherung an die Soll-Temperatur entscheidend. Dabei gelten folgende Fallunterscheidungen:

K1 >= 1:    künftiger Wärmemengentransfer nach Gleichung 4 wird erhöht, maximal für die Dauer des Gesamtzyklus;
0 < K1 < 1:    Wärmemengentransfer nach Gleichung 4 wird verringert;
K1 = 0:    Mindestimpuls;
K1 < 0:    Temperiermedienwechsel, danach Mindestimpuls

Bis einschließlich Zyklus 26 wird die Solltemperatur von 45 °C Werkzeugtemperatur durch Wärmezufuhr und Verkürzung der Heizimpulse geregelt. Nach Zyklus 26 ist der Wärmeüberschuß in Zone 1 nur noch mit Temperiermedienwechsel abzuführen. Unmittelbar nach Medienwechsel wird im Folgezyklus ein Mindestpuls ausgelöst, danach startet die Berechnung des mittleren Wärmemengentansfers $WMT_M$ (i) neu.

Zone 2:

Die beim Start gemessene Temperatur T_ist beträgt 20 °C. Wegen der Differenz zur Solltemperatur T_soll = 28 °C erfolgt die paarweise Schaltung der zu Zone 10 gehörigen Ventile (Vorlauf, Rücklauf) des Heißwasserkreislaufes. Der Temperiermediendurchfluß erfolgt stetig bis die gemessene Isttemperatur die untere Toleranzgrenze von 25 °C erreicht hat. Beginnend mit dem ersten Zyklus der Spritzgießmaschine (Start + 45 min) berechnete das Temperaturregelsystem den Wärmemengentransfer für die Werkzeugzone 10.

Die folgende Tabelle 2 enthält die gemessenen und errechneten Prozeßwerte für eine Fertigungsperiode von 20 Maschinenzyklen:

Tabelle 2

| ( A ) | ( B ) | ( C ) | ( D ) | ( E ) | ( F ) | ( G ) | ( H ) | ( I ) | ( J ) | ( K ) |
|---|---|---|---|---|---|---|---|---|---|---|
| 5 | 28,2 | 0,47 | 50 | 9,0 | 38,0 | 7455,6 | 0,0 | 0,0 | 7455,6 | 3479,3 |
| 6 | 28,8 | 0,37 | 49,7 | 9,2 | 18,1 | 3481,0 | 0,0 | 0,0 | 5468,3 | 2005,0 |
| 7 | 29,8 | 0,20 | 49,3 | 9,1 | 11,4 | 2280,0 | 0,0 | 0,0 | 4405,5 | 881,1 |
| 8 | 31,4 | -0,07 | 48,9 | 9,1 | 5,5 | 1616,0 | 0,0 | 0,0 | 2459,0 | -163,9 |
| 9 | 30,5 | 0,92 | 17,3 | 7,1 | 10,0 | -937,2 | 0,0 | 0,0 | -937,2 | -859,1 |
| 10 | 30,3 | 0,88 | 17,2 | 7,0 | 9,3 | -861,0 | 5,0 | -459,8 | -1129,0 | -997,3 |
| 11 | 29,7 | 0,78 | 17,3 | 7,1 | 11,3 | -999,0 | 8,5 | -751,5 | -1336,2 | -1046,7 |
| 12 | 29,2 | 0,70 | 17,3 | 7,0 | 12,5 | -1048,0 | 6,4 | -535,4 | -1551,6 | -1086,1 |
| 13 | 28,8 | 0,63 | 17,3 | 7,1 | 13,3 | -1088,0 | 6,2 | -507,7 | -1595,7 | -1010,6 |
| 14 | 28,2 | 0,53 | 17,2 | 7,2 | 12,8 | -1012,0 | 4,0 | -314,6 | -1461,1 | -779,3 |
| 15 | 28 | 0,50 | 17,3 | 7,1 | 10,3 | -780,5 | 8,4 | -638,1 | -1447,0 | -723,5 |
| 16 | 27,9 | 0,48 | 17,3 | 7,0 | 9,7 | -725,0 | 10,4 | -773,9 | 1414,7 | -683,8 |
| 17 | 28,1 | 0,52 | 17,4 | 7,1 | 9,0 | -685,0 | 4,6 | -350,9 | 1317,8 | -680,9 |
| 18 | 27,9 | 0,48 | 17,3 | 7,0 | 9,1 | -682,5 | 10,6 | -789,9 | -1335,7 | -645,6 |
| 19 | 28,2 | 0,53 | 17,2 | 7,0 | 8,4 | -647,0 | 7,2 | -552,8 | -1236,0 | -659,2 |
| 20 | 27,9 | 0,48 | 17,2 | 7,1 | 8,7 | -661,0 | 11,4 | -867,3 | -1400,2 | -676,7 |
| 21 | 28,1 | 0,52 | 17,3 | 7,0 | 8,9 | -678,0 | 7,9 | -600,7 | -1335,6 | -690,1 |
| 22 | 28 | 0,50 | 17,3 | 7,0 | 9,2 | -691,0 | 7,8 | -585,9 | -1361,3 | -680,6 |
| 23 | 28,2 | 0,53 | 17,4 | 7,1 | 8,8 | -682,0 | 6,6 | -508,2 | -1248,6 | -665,9 |
| 24 | 27,9 | 0,48 | 17,3 | 7,0 | 8,9 | -667,0 | 9,2 | -685,6 | -1273,2 | -615,4 |

Bis einschließlich Zyklus 8 wird die Solltemperatur von 28 °C Medienrücklauftemperatur durch Wärmezufuhr und Verkürzung der Heizimpulse geregelt. Nach Zyklus 8 ist der Wärmeüberschuß in Zone 10 nur noch nach Temperiermedienwechsel auf den Kaltwasserkreislauf abzuführen. Unmittelbar nach Medienwechsel wird im Folgezyklus ein Mindestpuls ausgelöst, danach startet die Berechnung des mittleren Wärmemengentansfers $WMT_M$ (i) neu.

Beispiel 2

In Beispiel 2 werden das Verfahren und die Vorrichtung der Erfindung anhand eines Kleinwerkzeuges mit vier Zonen beschrieben, wobei das Verfahren anhand einer Zone näher erläutert wird. Über den gesamten Prozeß ist Wärmezuführung erforderlich. Die Vorrichtung ist schematisch in Fig. 1 gezeigt.

Auf einer Spritzgießmaschine vom Typ DEMAG wird ein technisches Formteil "Gehäuseabdeckung" aus Polycarbonat mit folgenden Parametern hergestellt:

- Werkzeugauslegung: 2-fach
- Masse eines Schusses: 0,055 kg
- Schließkraft: 800 kN
- Vorlauftemperatur kalt: 17 °C
- Zykluszeit: 32 s

Das Spritzgießwerkzeug ist mit 4 Temperierkreisläufen ausgestattet. Das multizonale Temperaturregelsystem ist zur erfindungsgemäßen Regelung von 4 Werkzeugzonen ausgerüstet. Die 4 Werkzeugzonen sind wie folgt mit der Temperiermedienversorgung verbunden:
Vom zentralen Kühlkreislauf des kunststoffverarbeitenden Betriebes wird der Temperiermedienverteiler des kalten Temperiermediums gespeist. Für jede einzelne der 4 Werkzeugzonen wird vom kalten Temperiermedienverteiler eine Einzelleitung, die mit einem Magnetventil ausgestattet ist, zu einem Verbindungsteil (z.B. T-Stück) geführt. Vom Heizgerät (Heizleistung 6 kW), das Bestandteil der erfindungsgemäßen Vorrichtung ist, wird der Temperiermedienverteiler des heißen Temperiermediums gespeist. Für jede einzelne der 4 Werkzeugzonen wird vom heißen Temperiermedienverteiler eine Einzelleitung, die mit einem Magnetventil ausgestattet ist, zu dem genannten Verbindungsteil (z.B. T-Stück) geführt. Das Verbindungsteil (T-Stück) befindet sich zweckmäßigerweise in Werkzeugnähe. Die verbleibende Einzelleitung zum Temperiermedienkanal des Spritzgießwerkzeuges ist mit einem Durchflußsensor zur Messung des Temperiermediendurchflusses versehen. Jeweils an zentraler Stelle in der Zuleitung des kalten Temperiermediums und in der Zuleitung des heißen Temperiermediums befindet sich ein Temperaturfühler zur Messung der Temperiermedienvorlauftemperatur. Beide vorlaufseitigen Temperiermedienverteiler, einschließlich Magnetventilen und Durchflußsensoren sind gemeinsam als kompakte Baugruppe ausgeführt und an der maschinenseitigen Aufspannplatte des Spritzgießwerkzeuges installiert.
Die 4 Zonen des Spritzgießwerkzeuges sind mit Temperaturfühlern ausgerüstet. Zwei der Temperaturfühler sind im Werkzeug plaziert, jeweils in der geometrischen Mitte zwischen Temperierkanalebene und Kavität. Bei den verbleibenden zwei Werkzeugzonen befinden sich die Temperaturfühler in Spezialadaptern unmittelbar im werkzeugseitigen Ausgang in Verlängerung des Temperiermedienkanals.
Beispielhaft soll die Temperaturregelung an Werkzeugzone 1 erläutert werden. Werkzeugzone 1 ist mit einem Temperaturfühler im Werkzeug ausgestattet.
Als Solltemperatur für Zone 1 wird eine Werkzeugtemperatur von 85 °C vorgegeben. Die Toleranzen für die Werkzeugtemperatur beträgt +/- 3 K.
Das multizonale Temperaturregelsystem wird vor der Spritzgießmaschine gestartet. Mit den ersten Vergleich zwischen vorgegebenen Solltemperaturen und gemessenen Isttemperaturen erkennt das System Heizungsbedarf, startet das Heizgerät und setzt als Vorlauftemperatur des Heizkreislaufes eine Solltemperatur ein, die 5 K über der maximalen Solltemperatur der Werkzeugzonen liegt. 30 Minuten nach dem Start des Temperaturregelsystems wird die Spritzgießmaschine gestartet.

Zone 1:

Die beim Start gemessene Temperatur T_ist beträgt 20 °C. Wegen der Differenz zur Solltemperatur T_soll = 85 °C erfolgt die paarweise Schaltung der zu Zone 1 gehörigen Ventile (Vorlauf, Rücklauf) des Heißwasserkreislaufes. Der Temperiermediendurchfluß erfolgt stetig bis die gemessene Isttemperatur die untere Toleranzgrenze von 82 °C erreicht hat. Beginnend mit dem ersten Zyklus der Spritzgießmaschine (Start + 30 min) berechnet das Temperaturregelsystem den Wärmemengentransfer für die Werkzeugzone 1.
Die folgende Tabelle 3 enthält die gemessenen und errechneten Prozeßwerte für eine Fertigungsperiode von 18 Maschinenzyklen:

Tabelle 3

| ( A ) | ( B ) | ( C ) | ( D ) | ( E ) | ( F ) | ( G ) | ( H ) | ( I ) | ( J ) | ( K ) |
|---|---|---|---|---|---|---|---|---|---|---|
| 5 | 80,0 | 1,33 | 90,4 | 7,7 | 32,0 | 2562,6 | 0,0 | 0,00 | 2562,6 | 3416,7 |
| 6 | 81,2 | 1,13 | 90,3 | 7,7 | 32,0 | 2242,2 | 0,0 | 0,00 | 2402,4 | 2722,7 |
| 7 | 82,3 | 0,95 | 90,1 | 7,6 | 32,0 | 1897,0 | 0,0 | 0,00 | 2233,9 | 2122,2 |
| 8 | 82,9 | 0,85 | 90 | 7,7 | 32,0 | 1749,4 | 0,0 | 0,00 | 1962,9 | 1668,4 |
| 9 | 83,4 | 0,77 | 89,8 | 7,7 | 32,0 | 1577,0 | 0,0 | 0,00 | 1741,1 | 1334,9 |
| 10 | 83,8 | 0,70 | 89,5 | 7,6 | 30,8 | 1334,9 | 1,2 | 51,98 | 1571,1 | 1099,8 |

(fortgesetzt)

| ( A ) | ( B ) | ( C ) | ( D ) | ( E ) | ( F ) | ( G ) | ( H ) | ( I ) | ( J ) | ( K ) |
|---|---|---|---|---|---|---|---|---|---|---|
| 11 | 84,1 | 0,65 | 89,1 | 7,6 | 28,9 | 1099,8 | 3,1 | 117,80 | 1393,8 | 906,0 |
| 12 | 84,4 | 0,60 | 89,5 | 7,7 | 23,1 | 906,0 | 8,9 | 349,50 | 1286,6 | 772,0 |
| 13 | 84,6 | 0,57 | 89,9 | 7,7 | 18,9 | 772,0 | 13,1 | 534,61 | 1306,6 | 740,4 |
| 14 | 84,8 | 0,53 | 90,2 | 7,7 | 17,8 | 740,4 | 14,2 | 590,44 | 1318,7 | 703,3 |
| 15 | 84,9 | 0,52 | 89,9 | 7,8 | 18,0 | 703,3 | 11,0 | 429,00 | 1256,6 | 649,2 |
| 16 | 84,7 | 0,55 | 89,6 | 7,8 | 17,0 | 649,2 | 13,0 | 496,86 | 1203,1 | 661,7 |
| 17 | 84,9 | 0,52 | 89,2 | 7,7 | 20,0 | 661,7 | 11,0 | 364,21 | 1101,4 | 569,1 |
| 18 | 85,0 | 0,50 | 89 | 7,8 | 18,2 | 569,1 | 6,0 | 187,20 | 976,1 | 488,0 |
| 19 | 84,7 | 0,55 | 89,3 | 7,6 | 14,0 | 488,0 | 7,5 | 262,20 | 844,1 | 464,3 |
| 20 | 84,9 | 0,52 | 89,6 | 7,6 | 13,0 | 469,3 | 5,5 | 196,46 | 722,4 | 373,2 |
| 21 | 85,1 | 0,48 | 89,6 | 7,6 | 10,9 | 373,2 | 8,5 | 290,70 | 691,6 | 334,3 |
| 22 | 84,9 | 0,52 | 89,6 | 7,6 | 9,4 | 334,3 | 9,2 | 328,62 | 662,5 | 342,3 |

Die Spaltenüberschriften haben folgende Bedeutung:

(A): Maschinenzyklus i
(B): T_ist_quer(i) nach Gleichung 1
(C): K1 nach Gleichung 5
(D): T_vor(i)
(E): V_punkt(i)
(F): Temperiermedienimpuls zur Realisierung des nach Gleichung 4 vorgegebenen Wärmemengentransfers $WMT_T$ (i+1)
(G): nach Vorgabe Gleichung 4 realisierter Wärmemengentransfer WMT ( i ), (Gleichung 2)
(H): Zusatzpuls des Temperiermediums zur Erreichung von T_soll
(I): durch den Zusatzpuls realisierter Wärmemengentransfer nach Gleichung 2
(J): $WMT_M$ (i), mittlerer Wärmemengentransfer der zurückliegenden 3 Zyklen
(K): $WMT_T$ (i+1), der für den (i+1)-ten Zyklus berechnete (Soll)Wärmemengentransfer

Im vorstehenden Beispiel reicht die aus der Kunststoffschmelze in das Spritzgießwerkzeug eingebrachte Wärmemenge nicht aus, um das Spritzgießwerkzeug auf der gewünschten Temperatur zu halten. Es besteht die Notwendigkeit der Wärmezufuhr über das Temperiermedium.

Beispiel 3

In Beispiel 3 werden das Verfahren und die Vorrichtung der Erfindung anhand eines Werkzeuges mit acht Zonen beschrieben, wobei das Verfahren anhand einer Zone näher erläutert wird. Das Temperaturregelsystem erlaubt nur die Kühlung der Zonen. Ein Heizkreislauf ist nicht vorgesehen. Die Vorrichtung ist schematisch in Fig. 2 gezeigt.
Auf einer Spritzgießmaschine vom Typ Engel wird ein Automobilteil "Verkleidungsteil" aus ABS mit folgenden Parametern hergestellt:

- Werkzeugauslegung:        1+1 - fach
- Masse eines Schusses:        0,39 kg
- Schließkraft:        6500 kN
- Vorlauftemperatur kalt:        17 °C
- Zykluszeit:        35 s

Das Spritzgießwerkzeug ist im kalten Zustand entformbar.
Das Spritzgießwerkzeug ist mit 8 Temperierkreisläufen ausgestattet. Das multizonale Temperaturregelsystem ist zur erfindungsgemäßen Regelung von 8 Werkzeugzonen ausgerüstet. Die 8 Werkzeugzonen sind wie folgt mit der Temperiermedienversorgung verbunden:
Vom zentralen Kühlkreislauf des kunststoffverarbeitenden Betriebes wird der Temperiermedienverteiler des kalten Temperiermediums gespeist. Für jede einzelne der 8 Werkzeugzonen wird vom kalten Temperiermedienverteiler eine Einzelleitung, die mit einem Magnetventil ausgestattet und nachfolgend mit einem Durchflußsensor zur Messung des Temperiermediendurchflusses versehen ist, zum Spritzgießwerkzeug geführt. An zentraler Stelle in der Zuleitung des kalten Temperiermediums befindet sich ein Temperaturfühler zur Messung der Temperiermedienvorlauftemperatur.

Die 8 Zonen des Spritzgießwerkzeuges sind mit Temperaturfühlern ausgerüstet. Zwei der Temperaturfühler sind im Werkzeug plaziert, jeweils in der geometrischen Mitte zwischen Temperierkanalebene und Kavität. Bei den verbleibenden 6 Werkzeugzonen befinden sich die Temperaturfühler in Spezialadaptern unmittelbar im werkzeugseitigen Ausgang in Verlängerung des Temperiermedienkanals. Nach dieser Verlängerung oder Einzelleitung wird jeder Temperiermedienkanal über einen Temperiermedienverteiler in den zentralen Kühlkreislauf des kunststoffverarbeitenden Betriebes geführt. Beide Temperiermedienverteiler, der vorlaufseitige und der rücklaufseitige, einschließlich Magnetventilen, Durchflußsensoren und Temperaturfühlern sind als eine kompakte Baugruppe ausgeführt und an der maschinenseitigen Aufspannplatte des Spritzgießwerkzeuges installiert.

Das Bedien- und Steuerteil des multizonalen Temperaturregelsystems ist unmittelbar neben dem Bedien- und Steuerteil der Spritzgießmaschine angebracht. Das Bedienteil des multizonalen Temperaturregelsystems ist mit der Steuerung der Spritzgießmaschine gekoppelt und empfängt das Signal "Beginn Spritzen" aus jedem Zyklus der Spritzgießmaschine. Dieses Signal gilt als Zyklusstartsignal für das multizonale Temperaturregelsystem, nach Ablauf einer Verzögerungszeit werden die Temperiermedienimpulse für die einzelnen Werkzeugzonen ausgelöst. Die Verzögerungszeit ist zweckmäßigerweise gleich der Einspritzzeit.

Beispielhaft soll die Temperaturregelung an Werkzeugzone 1 erläutert werden. Werkzeugzone 1 ist mit einem Temperaturfühler im Temperiermedienrücklauf ausgestattet.

Als Solltemperatur für Zone 1 wird eine Medienrücklauftemperatur von 25 °C gewählt. Die Toleranzen zur Solltemperatur betragen +/- 3 K. Die Dauer des Mindestimpulses beträgt 3 s. Das multizonale Temperaturregelsystem wird mit der Spritzgießmaschine gestartet.

Zone 1:

Die beim Start mit Erstimpuls gemessene Temperatur T_ist beträgt 17°C. Wegen der Differenz zur Solltemperatur T_soll = 25 °C bleibt der Temperiermedienkreislauf (Kühlkreislauf) geschlossen. Mit jedem Zyklus der Spritzgießmaschine wird das Spritzgießwerkzeug durch den Wärmeeintrag aus der Kunststoffschmelze aufgeheizt. Nach einer vorgegebenen Anzahl von Spritzgießzyklen (10) beginnt das multizonale Temperaturregelsystem das zu Zone 1 gehörige Magnetventil zum Zeitpunkt Ende des Einspritzvorganges für die Dauer des vorgegebenen Mindestpulses zu öffnen. Mit diesem Zyklus berechnet das Temperaturregelsystem erstmals den Wärmemengentransfer für die Werkzeugzone 1 und beginnt die Berechnung des mittleren Wärmemengentransfers $WMT_M(i)$.

Berechnete Größen:

T_ist_quer: Durchschnitt der gemessenen Ist-Temperatur T_ist über den gesamten Temperiermedienimpuls;

WMT(i) im Zyklus i realisierter Wärmemengentransfer;

$WMT_M(i)$: durchschnittlicher Wärmemengentransfer vorangegangener Zyklen;

K1: Maß für den Abstand der Ist-Temperatur T_ist zur vorgegebenen Soll-Temperatur T_soll unter Einbeziehung der Temperaturtoleranzen;

$WMT_T(i+1)$: Vorgabe des Wärmemengentransfers im Folgezyklus.

Über die Dauer des Temperiermedienimpulses werden die durchschnittliche Temperatur T_ist_quer nach Gleichung 1 und der zum Zykluszeitpunkt realisierte Wärmemengentransfer nach Gleichung 2 berechnet.

```
Gleichung 2
```

$$WMT(i) = \sum_{j=1}^{n} (T\_vor(t_j) - T\_ist(t_j)) * V(t_j)$$

Nach Abschluß der Temperiermedienimpulse wird aus dem aktuell errechneten Wert T_ist_quer für die Ist-Temperatur der Zone ein Faktor K1 berechnet (Gleichung 5), mit dem der mittlere Wärmemengentransfer $WMT_M(i)$ zurückliegender Zyklen bewertet und als Vorgabe für den Folgezyklus (Zyklus i+1) als $WMT_T(i+1)$ bereitgestellt wird.

Gleichung 5

$$K1 = \frac{T\_soll + T\_g - T\_ist\_quer}{2 * T\_g}$$

$$T\_g = T\_u = -3.$$

Daraus ergibt sich aus dem abgeschlossenen Zyklus der notwendige Wärmemengentransfer für den folgenden Zyklus nach Gleichung 4:

Gleichung 4

$$WMT_T \ (i+1) = K1 * \ WMT_M \ (i)$$

$WMT_T$ (i+1):     für den i+1 Zyklus berechneter und vorgegebener Wärmemengentransfer

Während des Temperiermedienimpulses zur Umsetzung des berechneten Wärmemengentransfer $WMT_T$ (i+1) wird im (i+1)-ten Zyklus fortlaufend der tatsächlich realisierte Wärmemengentransfer WMT (i+1) ermittelt (Gleichung 2)

Zu dem Zeitpunkt, an dem der realisierte Wärmemengentransfer den berechneten Wärmemengentransfer wertmäßig überschreitet, wird der Temperiermedienimpuls gestoppt. Ist die damit realisierte Dauer des Temperiermedienimpulses kürzer als die vorgegebene Mindestdauer öffnet das Magnetventil über die Dauer des Mindestimpulses.

Die bis zu diesem Zeitpunkt ermittelte Temperatur T_ist_quer wird mit der vorgegebenen Solltemperatur T_soll verglichen.

Ist die mittlere Isttemperatur T_ist_quer größer als die Solltemperatur T_soll wird der Kühlimpuls bis zum Erreichen von T_soll oder bis zum Start des Folgezyklus fortgeführt. Der mit Fortführung des Temperierimpulses realisierte Wärmemengentransfer wird in die nachfolgende Berechnung des mittleren Wärmemengentransfers $WMT_M$ (i) und damit in die Berechnung des künftigen Wärmemengentransfers $WMT_T$ (i+1) einbezogen. Zuvor erfolgt eine Anpassung des Faktors K1 nach Gleichung 5.

Die folgende Tabelle 4 enthält die gemessenen und errechneten Prozeßwerte für eine Fertigungsperiode von 18 Maschinenzyklen:

Tabelle 4

| ( A ) | ( B ) | ( C ) | ( D ) | ( E ) | ( F ) | ( G ) | ( H ) | ( I ) | ( J ) | ( K ) |
|---|---|---|---|---|---|---|---|---|---|---|
| 9 | k.A. | 0,00 | 17,2 | 0 | 0,0 | 0,0 | 0,0 | 0,00 | 0,0 | 0,0 |
| 10 | k.A. | 0,00 | 17,2 | 0 | 0,0 | 0,0 | 0,0 | 0,00 | 0,0 | 0,0 |
| 11 | 21,9 | -0,02 | 17,2 | 10,5 | 3,0 | -148,1 | 0,0 | 0,00 | -148,1 | 2,5 |
| 12 | 22,8 | 0,13 | 17,2 | 10,5 | 3,0 | -176,4 | 0,0 | 0,00 | -162, | -21,6 |
| 13 | 23,6 | 0,27 | 17,2 | 10,5 | 3,0 | -201,6 | 0,0 | 0,00 | -175,4 | -46,8 |
| 14 | 24,1 | 0,35 | 17,2 | 10,5 | 3,0 | -217,4 | 0,0 | 0,00 | -198,5 | -69,5 |
| 15 | 24,5 | 0,42 | 17,2 | 10,5 | 3,0 | -230,0 | 0,0 | 0,00 | -216,3 | -90,1 |
| 16 | 24,8 | 0,47 | 17,2 | 10,5 | 3,0 | -239,4 | 0,0 | 0,00 | -228,9 | -106,8 |
| 17 | 25,1 | 0,52 | 17,2 | 10,5 | 3,0 | -248,9 | 6,5 | -539,18 | -788,0 | -407,1 |
| 18 | 24,8 | 0,47 | 17,2 | 10,5 | 5,1 | -407,1 | 5,2 | -414,96 | -805,1 | -375,7 |
| 19 | 24,6 | 0,43 | 17,2 | 10,5 | 4,8 | -375,7 | 4,0 | -310,80 | -765,5 | -331,7 |
| 20 | 24,8 | 0,47 | 17,2 | 10,5 | 4,2 | -331,7 | 4,9 | -391,02 | -743,8 | -347,1 |
| 21 | 25,0 | 0,50 | 17,2 | 10,5 | 4,2 | -347,1 | 7,8 | -638,82 | -798,4 | -399,2 |
| 22 | 29,6 | 0,43 | 17,2 | 10,5 | 5,1 | -399,2 | 4,4 | -341,88 | -816,6 | -353,9 |
| 23 | 25,0 | 0,50 | 17,2 | 10,5 | 4,3 | -353,9 | 7,5 | -614,25 | -898,4 | -449,2 |

(fortgesetzt)

| ( A ) | ( B ) | ( C ) | ( D ) | ( E ) | ( F ) | ( G ) | ( H ) | ( I ) | ( J ) | ( K ) |
|---|---|---|---|---|---|---|---|---|---|---|
| 24 | 24,9 | 0,48 | 17,2 | 10,5 | 5,6 | -449,2 | 7,2 | -582,12 | -913,5 | -441,5 |
| 25 | 29,6 | 0,43 | 17,2 | 10,5 | 5,7 | -441,5 | 5,8 | -450,66 | -963,9 | -417,7 |
| 26 | 24,7 | 0,45 | 17,2 | 10,5 | 5,3 | -417,7 | 7,0 | -551,25 | -964,1 | -433,9 |

Die Spaltenüberschriften haben folgende Bedeutung:

(A): Maschinenzyklus i
(B): T_ist_quer(i) nach Gleichung 1
(C): K1 nach Gleichung 5
(D): T_vor(i)
(E): V_punkt(i)
(F): Temperiermedienimpuls zur Realisierung des nach Gleichung 4 vorgegebenen Wärmemengentransfers $WMT_T$ (i+1)
(G): nach Vorgabe Gleichung 4 realisierter Wärmemengentransfer WMT ( i ), (Gleichung 2)
(H): Zusatzpuls des Temperiermediums zur Erreichung von T_soll
(I): durch den Zusatzpuls realisierter Wärmemengentransfer nach Gleichung 2
(J): $WMT_M$ (i), mittlerer Wärmemengentransfer der zurückliegenden 3 Zyklen
(K): $WMT_T$ (i+1), der für den (i+1)-ten Zyklus berechnete (Soll)Wärmemengentransfer

Bis einschließlich Zyklus 10 bleibt das im Kühlkreislauf befindliche Magnetventil geschlossen. In den Zyklen 11 bis 16 ergibt die Realisierung des als Vorgabe berechneten Wärmemengentransfers $WMT_T$ (i+1) eine kürzere Impulsdauer als die vorgegebene Mindestdauer, das Magnetventil bleibt für die Mindestpulsdauer geöffnet. Ab Zyklus 17 erfordert die Einhaltung der Solltemperatur die Einleitung von zusätzlichen Kühlimpulsen.

**Patentansprüche**

1. Vorrichtung zur Temperierung des Formwerkzeuges einer Kunststoffverarbeitungsmaschine, insbesondere einer Spritzgießmaschine, wobei

   (a) in dem Formwerkzeug Temperiermedienkanäle für zumindest ein Temperiermedium vorgesehen sind, wobei jeder Temperiermedienkanal einer Zone des Formwerkzeuges zugeordnet ist, so daß die Temperatur einer Zone unabhängig von der Temperatur einer anderen Zone geregelt werden kann;
   (b) jeder Temperiermedienkanal eine Temperiermedien-Zuleitung und eine Temperiermedien-Ableitung aufweist;
   (c) jeder Zone des Formwerkzeuges ein Temperaturfühler zur Bestimmung der Ist-Temperatur der Zone (T_ist) zugeordnet ist;
   (d) zumindest ein Temperaturfühler zur Bestimmung der Temperatur des Temperiermediums vor dem Eintritt in das Formwerkzeug (Temperiermedien-Vorlauftemperatur T_vor) vorgesehen ist; und
   (e) jeder Zone ein Mittel zur Bestimmung des Durchflusses (V) an Temperiermedium, das durch den Temperiermedienkanal fließt, zugeordnet ist.

2. Vorrichtung nach Anspruch 1, **dadurch gekennzeichnet, daß** jede Temperiermedien-Zuleitung mit einem Vorlauf für ein kaltes Temperiermedium und einem Vorlauf für ein heißes Temperiermedium verbunden ist.

3. Vorrichtung nach Anspruch 2, **dadurch gekennzeichnet, daß** jede Temperiermedien-Ableitung mit einem Rücklauf für das kalte Temperiermedium und einem Rücklauf für das heiße Temperiermedium verbunden ist.

4. Vorrichtung nach einem der vorstehenden Ansprüche, **dadurch gekennzeichnet, daß** ferner jeder Vorlauf eines Temperiermedienkanals ein Ventil aufweist und jeder Rücklauf eines Temperiermedienkanals ein Ventil aufweist, wobei die Ventile für einen vorgegebenen Zeitraum (Temperiermedienimpuls) so geschaltet sind, daß

   - wenn die Temperatur einer Zone erhöht werden soll, das Ventil des Vorlaufes für das heiße Temperiermedium geöffnet ist und das Ventil des Rücklaufes für das heiße Temperiermedium geöffnet ist, während das Ventil des Vorlaufes für das kalte Temperiermedium geschlossen ist und das Ventil des Rücklaufes für das kalte

19

Temperiermedium geschlossen ist; und

- wenn die Temperatur einer Zone verringert werden soll, das Ventil des Vorlaufes für das kalte Temperiermedium geöffnet ist und das Ventil des Rücklaufes für das kalte Temperiermedium geöffnet ist, während das Ventil des Vorlaufes für das heiße Temperiermedium geschlossen ist und das Ventil des Rücklaufes für das heiße Temperiermedium geschlossen ist.

5. Vorrichtung nach Anspruch 1 oder Anspruch 2, **dadurch gekennzeichnet, daß** ferner ein Verteiler für das kalte und das heiße Temperiermedium vorgesehen ist, wobei der Verteiler

- einerseits mit den Vorläufen der Temperiermedienkanale der Zonen des Formwerkzeuges verbunden ist; und
- andererseits mit einer zentralen Zufuhrleitung für die Zuführung des kalten Temperiermediums und einer zentralen Zufuhrleitung für die Zuführung des heißen Temperiermediums verbunden ist;

so daß die Temperiermedien, wenn eine Veränderung der Temperatur einer Zone erforderlich ist, dem Temperiermedienkanal dieser Zone zugeführt werden können.

6. Vorrichtung nach einem der vorstehenden Ansprüche, **dadurch gekennzeichnet, daß** Temperaturfühler in jeder Temperiermedien-Ableitung angeordnet sind.

7. Vorrichtung nach einem der Ansprüche 1 bis 5, **dadurch gekennzeichnet, daß** Temperaturfühler in dem Formwerkzeug angebracht sind, wobei für jede Zone zumindest ein Temperaturfühler zugeordnet ist.

8. Vorrichtung nach einem der vorstehenden Ansprüche, **dadurch gekennzeichnet, daß** die Mittel zur Bestimmung des Durchflusses an Temperiermedium (V) Sensoren sind.

9. Verfahren zur Temperierung von Formwerkzeugen unter Verwendung einer Vorrichtung nach einem der vorstehenden Ansprüche, wobei während jedes Zyklus zur Fertigung eines Formteils mittels des Formwerkzeuges ein Temperiermedienimpuls für jede Zone ausgelöst wird, umfassend

(a) das kontinuierliche Bestimmen der Ist-Temperatur (T_ist), der Temperiermedien-Vorlauftemperatur (T_vor) und des Temperiermedien-Durchflusses (V) während des Temperiermedienimpulses in einem i-ten Zyklus;
(b) das Berechnen der Wärmemenge (WMT (i)), die während des Temperiermedienimpulses von einem Temperiermedium der Zone des Formwerkzeuges zugeführt oder aus dieser abgeführt worden ist;
(c) das Bewerten der zugeführten oder abgeführten Wärmemenge (WMT (i)) mittels eines Faktors (K1);
(d) das Berechnen einer Wärmemenge ($WMT_T$ (i+1)), die in einem (i+1)-ten Zyklus von einem Temperiermedium der Zone des Formwerkzeuges zugeführt oder aus dieser abgeführt werden soll; und
(e) das Wiederholen der Schritte (a) bis (e) bis zur Ausführung des letzten Zyklus, wobei in Schritt (a) die Dauer des Temperiermedienimpulses so bemessen ist, daß der Zone eine Wärmemenge zugeführt oder aus dieser abgeführt wird, die der berechneten Wärmemenge ($WMT_T$ (i+1) entspricht.

10. Verfahren nach Anspruch 9, **dadurch gekennzeichnet, daß** die Wärmemenge (WMT (i)) aus den gemessenen Ist-Temperaturen (T_ist), den Temperiermedien-Vorlauftemperaturen (T_vor) und den mittleren Temperiermedien-Durchflüssen (V) während des Temperiermedienimpulses in dem i-ten Zyklus berechnet wird.

11. Verfahren nach Anspruch 9 oder Anspruch 10, **dadurch gekennzeichnet, daß** der Faktor (K1) aus der Soll-Temperatur der Zone (T_soll), der mittleren Ist-Temperatur (T_ist_quer) während des Temperiermedienimpulses in dem i-ten Zyklus und der vorgegeben zulässigen Abweichung (T_g) von der Solltemperatur berechnet wird.

12. Verfahren nach einem der Ansprüche 9 bis 11, **dadurch gekennzeichnet, daß** anhand der für (i+1)-ten Zyklus berechneten Wärmemenge ($WMT_T$ (i+1)) bestimmt wird, für welchen Zeitraum die Ventile des Vorlaufes und des Rücklaufes für ein Temperiermedium geöffnet werden.

13. Verfahren nach einem der Ansprüche 9 bis 12, **dadurch gekennzeichnet, daß** anhand der für (i+1)-ten Zyklus berechneten Wärmemenge ($WMT_T$ (i+1)) bestimmt wird, ob die Ventile des Vorlaufes und des Rücklaufes für das kalte Temperiermedium oder ob die Ventile des Vorlaufes und des Rücklaufes für das heiße Temperiermedium geöffnet werden.

14. Verfahren nach einem der Ansprüche 9 bis 13, **dadurch gekennzeichnet, daß** zu Beginn eines jeden Zyklus eines der beiden Temperiermedien für eine vorgegebene Mindestzeit durch den Temperiermedienkanal der jeweiligen Zone geführt wird.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 312 628 B1 (WIEDER HORST K ET AL) 6. November 2001 (2001-11-06) * Spalte 11, Zeile 16 - Spalte 14, Zeile 28; Abbildungen * ----- | 1-14 | INV. B29C35/02 B29C45/73 B29C45/78 |
| A | US 6 280 665 B1 (KOTZAB WERNER) 28. August 2001 (2001-08-28) * Spalte 2, Zeile 41 - Spalte 3, Zeile 18; Abbildungen * ----- | 1-14 | |
| A | EP 0 748 680 A (EVANS, ROWLAND FRANK) 18. Dezember 1996 (1996-12-18) * Spalte 5, Zeile 47 - Spalte 7, Zeile 58; Abbildungen * ----- | 1,9 | |
| A | US 5 281 124 A (DELCROIX ET AL) 25. Januar 1994 (1994-01-25) * Spalte 4, Zeile 4 - Spalte 5, Zeile 52; Abbildungen * ----- | 1,9 | RECHERCHIERTE SACHGEBIETE (IPC) B29C |

Der vorliegende Recherchenbericht wurde für alle Patentansprüche erstellt

| Recherchenort | Abschlußdatum der Recherche | Prüfer |
|---|---|---|
| München | 7. September 2006 | Topalidis, Anestis |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 06 00 8885

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-09-2006

| Im Recherchenbericht angeführtes Patentdokument | Datum der Veröffentlichung | Mitglied(er) der Patentfamilie | Datum der Veröffentlichung |
|---|---|---|---|
| US 6312628      B1 | 06-11-2001 | KEINE | |
| US 6280665      B1 | 28-08-2001 | AT      316454 T<br>DE    19749495 A1<br>EP     0914925 A1 | 15-02-2006<br>12-05-1999<br>12-05-1999 |
| EP 0748680      A | 18-12-1996 | KEINE | |
| US 5281124      A | 25-01-1994 | DE     4104152 A1<br>EP     0499139 A1<br>JP     7195369 A | 27-08-1992<br>19-08-1992<br>01-08-1995 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0218919 A
- US 4420446 A
- DE 4307347
- EP 0704293 A